# EUROPEAN PATENT APPLICATION

(11) **EP 3 104 467 A1**
(43) Date of publication of application: **14.12.2016**
(21) Application number: 15746157.5
(22) Date of filing: 26.01.2015
(51) Int. Cl.: H01R 13/514, H01M 2/10, H01R 13/639, H01R 13/684, H01R 31/08

(54) **LAMINATED CONNECTOR**

(30) Priority: 06.02.2014 JP 2014021133; 07.05.2014 JP 2014096050
(71) Applicant: AutoNetworks Technologies, Ltd., Yokkaichi-shi, Mie 510-8503 (JP); Sumitomo Wiring Systems, Ltd., Yokkaichi-shi, Mie 510-8503 (JP); Sumitomo Electric Industries, Ltd., Osaka-shi, Osaka 541-0041 (JP)
(72) Inventor: HIGASHIKOZONO, Makoto, Yokkaichi-shi Mie 510-8503 (JP); SAKATA, Tomoyuki, Yokkaichi-shi Mie 510-8503 (JP); ICHIO, Toshifumi, Yokkaichi-shi Mie 510-8503 (JP); KUBOKI, Hideyuki, Yokkaichi-shi Mie 510-8503 (JP)
(74) Representative: Horn Kleimann Waitzhofer Patentanwälte PartG mbB
(86) International application number: PCT/JP2015/051978
(87) International publication number: WO 2015/118976

(57) **Abstract**

A stacked connector (10) includes a plurality of first sub housings (24) stacked in a stacking direction (B) that crosses a fitting direction (A). In each first sub housing (24), a stack clearance (R) in the stacking direction (B) is set between a stacking engaging section (43) and a stacking engaged section (44) in a state in which the stacking engaging section (43) and the stacking engaged section (44) are engaged with each other. A minimum engagement clearance (S) that is required for a movement restricting engaging section (47) and a movement restricting engaged section (48) to engage with each other is set between the movement restricting engaging section (47) and the movement restricting engaged section (48) in the fitting direction (A), in a state in which the movement restricting engaging section (47) and the movement restricting engaged section (48) are engaged with each other.

## Description

### Technical Field

The present invention relates to a stacked connector in which a plurality of sub housings are stacked.

### Background Art

A connector disclosed in Patent Document 1 is known as a connector configured to be connected to a plurality of stacked devices. This connector is a connector that is to be fitted to a stack in which a plurality of devices each having a terminal at an end thereof, are stacked, and that is configured to connect to the terminals of the plurality of devices altogether. The connector includes a plurality of terminal body sections having independent fitting sections for respectively connecting to the terminals of the devices, a terminal holding section for supporting the terminal body sections so as to be integrated therewith, and a tolerance absorbing section for connecting the fitting sections and the terminal holding section so as to be able to absorb a tolerance of the devices due to the stacking with an elastic force.

When connecting the connector and the stack in which a plurality of devices are stacked, it is necessary to take into consideration a stack tolerance caused when the plurality of devices are stacked. In the connector disclosed in Patent Document 1, the tolerance absorbing section deforms elastically and thereby absorbs a stack tolerance of the stacked devices, and thus the stack and the connector are connected to each other.

### Citation List

### Patent Document

Patent Document 1: JP 2012-221875A

### Summary of Invention

### Technical Problem

When, as described above, a plurality of devices are stacked and used, there are cases where the number of the devices is increased or decreased depending on the specification. In such a case, also in the connector that is to connect to the stack, the number of the terminal body sections needs to be increased or decreased according to the number of the devices.

However, according to the configuration of the conventional technique, since the plurality of terminal body sections are supported together by one terminal holding section, increasing or decreasing the number of the terminal body sections necessarily entails a change in the structure of the entire connector including the terminal holding section as well. Therefore, it is not easy to accommodate a change in the number of the stacked devices.

The present invention is accomplished in view of the above-described circumstances.

### Solution to Problem

According to the present invention, a stacked connector for fitting to a counterpart connector in a fitting direction, includes a plurality of first sub housings that are stacked in a stacking direction that crosses the fitting direction, wherein each of the plurality of first sub housings is provided with an engaging section protruding in the stacking direction, and an engaged section that engages with the engaging section, and a stack clearance is set, in the stacking direction, between the engaging section and the engaged section in a state in which the engaging section and the engaged section are engaged with each other, and a minimum engagement clearance that is required for the engaging section and the engaged section to engage with each other is set in the fitting direction.

According to the present invention, by engaging the engaging section and the engaged section with each other, it is possible to stack a suitable number of first sub housings in the stacking direction. Accordingly, it is possible to easily accommodate a change in the number of the stacked components due to a change in the specification or the like.

Furthermore, since a stack clearance is set in the stacking direction between the engaging section and the engaged section, it is possible to absorb a stack tolerance when a plurality of devices connected to the counterpart connector are stacked.

Furthermore, a minimum engagement clearance that is required for the engaging section and the engaged section to engage with each other is set in the fitting direction. Accordingly, it is possible to restrict the first sub housings from moving in the fitting direction. As a result, it is possible to improve the reliability in the electrical connection between the counterpart connector and the stacked connector.

Note that, if a design in which no engagement clearance between the engaging section and the engaged section is set in the fitting direction is employed, there is a risk that the engaging section and the engaged section cannot engage with each other. This is because, even when a plurality of the first housings are, for example, manufactured or assembled within a range of a tolerance (such as a manufacturing tolerance or an assembling tolerance), there is a risk that, for example, the first housings being manufactured or attached with the upper limit of the tolerance causes the problem that the engaging sections and the engaged sections interfere with each other and cannot engage with each other.

In order to solve the above-described problem, the minimum engagement clearance that is required for the engaging section and the engaged section to engage with each other is set, in the fitting direction, between the engaging section and the engaged section, taking the tolerance into consideration. Accordingly, it is possible to reliably engage the engaging section and the engaged section with each other.

The following aspects are preferable as embodiments of the invention. Preferably, the engaging section includes a stacking engaging section, and a movement restricting engaging section, which is a member different from the stacking engaging section, and the engaged section has a stacking engaged section that is engaged with the stacking engaging section in the stacking direction, and a movement restricting engaged section that is a member different from the stacking engaged section and is engaged with the movement restricting engaging section in the fitting direction.

According to the foregoing aspect, by the stacking engaging section and the stacking engaged section engaging with each other in the stacking direction, it is possible to hold the plurality of first sub housings in the stacking direction in a state in which they are stacked. Furthermore, by the movement restricting engaging section and the movement restricting engaged section engaging with each other in the fitting direction, it is possible to restrict the plurality of first sub housings from moving in the fitting direction.

Therefore, according to the foregoing aspect, it is possible to assign the function of holding the plurality of first sub housings in the stacking direction in the state in which they are stacked, and the function of restricting the plurality of first sub housings from moving in the fitting direction, to different members. Accordingly, it is possible to reliably hold the plurality of first sub housings in the state in which they are stacked, and to reliably restrict the first sub housings from moving in the fitting direction.

Preferably, the plurality of first sub housings respectively have protection sections for externally covering at least a part of the stacking engaging section in the state in which the stacking engaging section and the stacking engaged section are engaged with each other.

According to the foregoing aspect, it is possible to prevent the stacking engaging section from getting in contact with a foreign substance. As a result, it is possible to prevent the stacking engaging section and the stacking engaged section from disengaging from each other due to the stacking engaging section getting in contact with a foreign substance.

Preferably, the movement restricting engaging section is rib-shaped, protruding in the stacking direction and extending in a direction that crosses the fitting direction, and the movement restricting engaged section is formed at a position that corresponds to the movement restricting engaging section, and is groove-shaped so that the movement restricting engaging section is received.

By the movement restricting engaging section rib-shaped, it is possible to restrict the movement restricting engaging section from deforming. Accordingly, it is possible to reliably restrict the first sub housings from moving in the fitting direction.

Preferably, the movement restricting engaging section is rib-shaped, protruding in the stacking direction and extending in a direction that crosses the fitting direction, and the movement restricting engaged section is formed at a position that corresponds to the movement restricting engaging section, is rib-shaped, protruding in the stacking direction and extending in the direction that crosses the fitting direction, and abuts on the movement restricting engaging section in the fitting direction.

By making both the movement restricting engaging section and the movement restricting engaged section rib-shaped, it is possible to restrict the movement restricting engaging section and the movement restricting engaged section from deforming when the movement restricting engaging section and the movement restricting engaged section abut on each other. Accordingly, it is possible to reliably restrict the first sub housings from moving in the fitting direction.

Preferably, the movement restricting engaging section is columnar and protrudes in the stacking direction, and the movement restricting engaged section is formed at a position that corresponds to the movement restricting engaging section, and has a hole-like shape so that the movement restricting engaging section is received.

By making the movement restricting engaging section columnar, it is possible to restrict the movement restricting engaging section from deforming. Accordingly, it is possible to reliably restrict the first sub housings from moving in the fitting direction.

Preferably, each of the plurality of first sub housings is provided with: a twist restricting engaging section that protrudes in the stacking direction; and a twist restricting engaged section that is engaged with the twist restricting engaging section in a cross direction that is different from the fitting direction and crosses with the stacking direction.

According to the foregoing aspect, in the stacked first sub housings, the movement restricting engaging section and the movement restricting engaged section engage with each other in the fitting direction, and the twist restricting engaging section and the twist restricting engaged section engage with each other in the cross direction. Accordingly, by the stacked first sub housings being engaged with each other in at least two directions, the stacked first sub housings are prevented from being stacked in an orientation in which they are twisted in the stacking direction when the stacked first sub housings have moved in the stacking direction in a range of the stack clearance.

Preferably, the twist restricting engaging section is rib-shaped, protruding in the stacking direction and extending in a direction that crosses the cross direction, and the twist restricting engaged section is formed at a position that corresponds to the twist restricting engaging section, and is groove-shaped so that the twist restricting engaging section is received.

By making the twist restricting engaging section rib-shaped, it is possible to restrict the twist restricting engaging section from deforming. Accordingly, it is possible to reliably prevent the plurality of first sub housings from being stacked in the stacking direction in an orientation in which they are twisted.

Preferably, the first sub housing has an overcurrent protection element for interrupting an overcurrent.

According to the foregoing aspect, it is possible to prevent an overcurrent from flowing to the counterpart connector through conductive paths provided on the downstream side with respect to the first sub housings.

At one end, in the stacking direction, of a first sub housing group, which is formed by stacking the plurality of first sub housings, a second sub housing for engaging with at least one of the engaging section and the engaged section of the first sub housing arranged at the one end of the first sub housing group is overlapped (stacked) in the stacking direction, and at the other end, in the stacking direction, of the first sub housing group, a third sub housing for engaging with at least one of the engaging section and the engaged section of the first sub housing that is arranged at the other end of the first sub housing group is overlapped in the stacking direction.

According to the foregoing aspect, by increasing or decreasing the number of the first sub housings that are arranged between the second sub housing and the third sub housings, it is possible to accommodate a change in the number of the stacked components.

Preferably, the second sub housing and the third sub housing have a locking section for locking with a locked section formed on the counterpart connector.

According to the foregoing aspect, since the second sub housing arranged at one end of the first sub housing group and the third sub housing arranged at the other end have the locking section, it is possible to reliably hold the counterpart connector and the stacked connector in a state in which they are fitted to each other.

Preferably, the second sub housing and the third sub housing have an overcurrent protection element for interrupting an overcurrent.

According to the foregoing aspect, it is possible to prevent an overcurrent from flowing to the counterpart connector through conductive paths provided on the downstream side with respect to the second sub housing and the third sub housing.

### Advantageous Effects of Invention

According to the present invention, a stacked connector can easily accommodate a change in the number of stacked devices.

### Brief Description of Drawings

FIG. 1 is a perspective view illustrating a state in which a stacked connector according to Embodiment 1 of the present invention and a counterpart connector are fitted to each other.
FIG. 2 is a perspective view illustrating a state before the stacked connector and the counterpart connector are fitted to each other.
FIG. 3 is a perspective view illustrating a state before the counterpart connector is attached to a group of electrical storage elements.
FIG. 4 is an enlarged partial cross-sectional view illustrating a state in which a tab is received in a cavity of the counterpart connector.
FIG. 5 is a side view illustrating the stacked connector.
FIG. 6 is a cross-sectional view illustrating a first sub housing.
FIG. 7 is an exploded perspective view illustrating the first sub housing.
FIG. 8 is a perspective view illustrating the first sub housing.
FIG. 9 is a cross-sectional view taken along the line IX-IX of FIG. 6.
FIG. 10 is a side view illustrating the first sub housing.
FIG. 11 is a plan view illustrating the first sub housing.
FIG. 12 is a bottom view illustrating the first sub housing.
FIG. 13 is a side view illustrating a second sub housing.
FIG. 14 is a bottom view illustrating the second sub housing.
FIG. 15 is a perspective view illustrating the second sub housing.
FIG. 16 is a plan view illustrating the second sub housing.
FIG. 17 is a cross-sectional view illustrating the second sub housing.
FIG. 18 is a side view illustrating a third sub housing.
FIG. 19 is a plan view illustrating the third sub housing.
FIG. 20 is a perspective view illustrating the third sub housing.
FIG. 21 is a bottom view illustrating the third sub housing.
FIG. 22 is a cross-sectional view illustrating the third sub housing.
FIG. 23 is a side view illustrating the stacked connector.
FIG. 24 is an enlarged partial cross-sectional view illustrating a state in which tapered surfaces of the counterpart connector and tapered surfaces of the counterpart connector abut on each other.
FIG. 25 is an enlarged partial cross-sectional view illustrating a state in which a stack tolerance of the counterpart connector is absorbed by the stacked connector.
FIG. 26 is an enlarged partial cross-sectional view illustrating a state in which the stacked connector and the counterpart connector are fitted to each other.
FIG. 27 is an enlarged partial cross-sectional view illustrating a state in which the stacked connector and the counterpart connector are fitted to each other, illustrating a cross section that is different from that of FIG. 26.
FIG. 28 is an enlarged partial cross-sectional view illustrating a connection configuration of a tab, a relay terminal, a fuse, a terminal, and an electric wire.
FIG. 29 is a perspective view illustrating a state in which a stacked connector according to Embodiment 2 of the present invention and a counterpart connector are fitted to each other.
FIG. 30 is an exploded perspective view illustrating the counterpart connector and a group of electrical storage elements.
FIG. 31 is a perspective view illustrating an electrical storage module in the state before the stacked connector is fitted thereto.
FIG. 32 is a perspective view illustrating the stacked connector.
FIG. 33 is a perspective view illustrating a first sub housing.
FIG. 34 is an exploded perspective view illustrating the first sub housing.
FIG. 35 is a perspective view illustrating the first sub housing a part of which is cut away.
FIG. 36 is a plan view illustrating the first sub housing
FIG. 37 is a bottom view illustrating the first sub housing
FIG. 38 is an enlarged partial cross-sectional view illustrating a stack structure of the stacked connector.
FIG. 39 is a cross-sectional view taken along the line XXXIX-XXXIX of FIG. 39.
FIG. 40 is a bottom view illustrating a second sub housing.
FIG. 41 is a perspective view illustrating the second sub housing.
FIG. 42 is a plan view illustrating the second sub housing.
FIG. 43 is a perspective view illustrating a third sub housing.
FIG. 44 is a plan view illustrating the third sub housing.
FIG. 45 is a bottom view illustrating the third sub housing.
FIG. 46 is a perspective view illustrating a state in which tapered surfaces of the stacked connector and the counterpart connector abut on each other.
FIG. 47 is a perspective view illustrating a state in which a stack tolerance of the counterpart connector is absorbed by the stacked connector.
FIG. 48 is a perspective view illustrating a state in which the stacked connector and the counterpart connector are fitted to each other.
FIG. 49 is a perspective view illustrating a state in which a stacked connector according to Embodiment 3 of the present invention and a counterpart connector are fitted to each other.
FIG. 50 is a perspective view illustrating an electrical connection structure of a voltage detecting busbar, a fuse, a relay terminal, and a terminal.
FIG. 51 is an enlarged partial cross-sectional view illustrating a state in which the counterpart connector and the stacked connector are fitted to each other.
FIG. 52 is a perspective view illustrating the stacked connector.
FIG. 53 is an exploded perspective view illustrating a first sub housing.
FIG. 54 is a perspective view illustrating the first sub housing.
FIG. 55 is a front view illustrating the first sub housing.
FIG. 56 is a side view illustrating the first sub housing.
FIG. 57 is a rear view illustrating the first sub housing.
FIG. 58 is a plan view illustrating the first sub housing.
FIG. 59 is a bottom view illustrating the first sub housing.
FIG. 60 is a front view illustrating the stacked connector.
FIG. 61 is a cross-sectional view taken along the line LXI-LXI of FIG. 60.
FIG. 62 is a front view illustrating the stacked connector.
FIG. 63 is a cross-sectional view taken along the line LXIII-LXIII of FIG. 62.
FIG. 64 is a cross-sectional view taken along the line LXIV-LXIV of FIG. 62.
FIG. 65 is a bottom view illustrating a second sub housing.
FIG. 66 is a front view illustrating the second sub housing.
FIG. 67 is a perspective view illustrating a step for assembling a group of the first sub housings.

### Description of Embodiments

### Embodiment 1

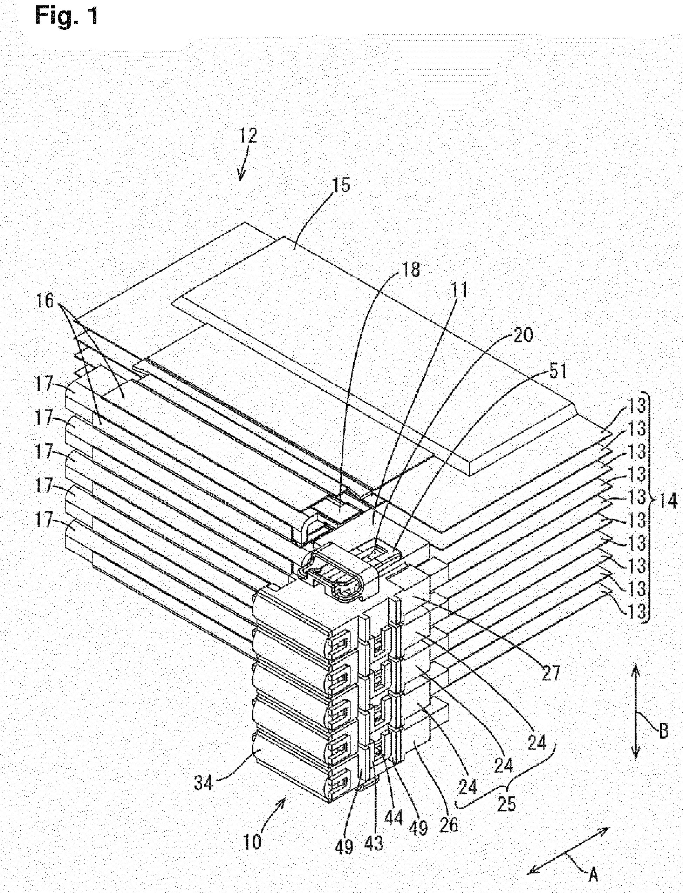

A stacked connector 10 according to Embodiment 1 of the present invention will be described with reference to FIGS. 1 to 28. The stacked connector 10 according to the present embodiment is fitted to a counterpart connector 11 in a fitting direction A. The counterpart connector 11 is arranged on an electrical storage module 12. Note that, in the drawings, a reference numeral may be added only to one of a plurality of like members, and reference numerals may be omitted for the other like members.

### Electrical Storage Module 12

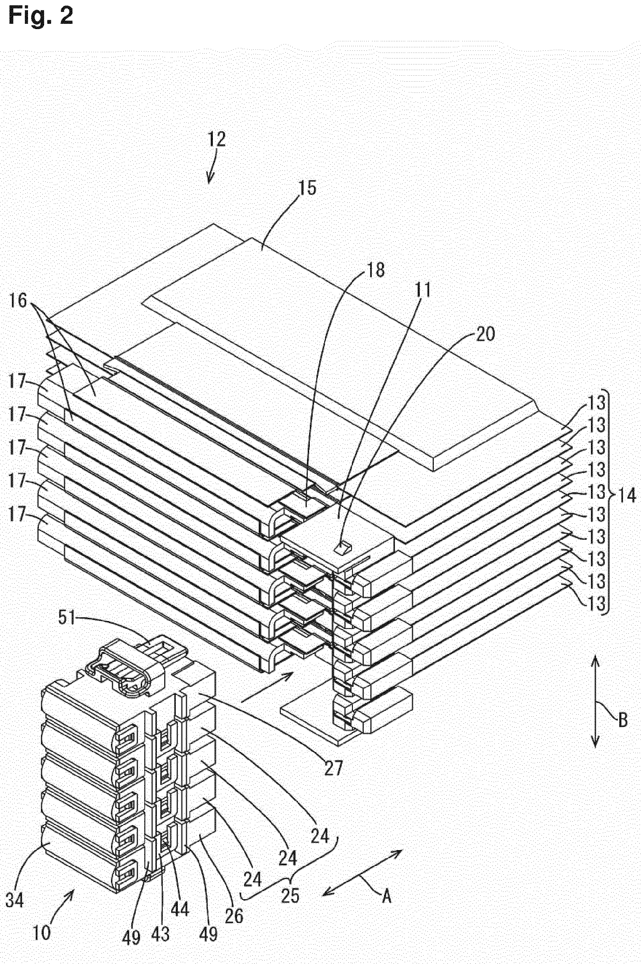

As shown in FIGS. 1 and 2, the electrical storage module 12 includes an electrical storage element group 14 in which a plurality of (ten, in the present embodiment) electrical storage elements 13 are stacked in a stacking direction B that crosses the fitting direction A. In the present embodiment, the fitting direction A and the stacking direction B are substantially orthogonal to each other. Note that "substantially orthogonal" includes cases where the fitting direction A and the stacking direction B are orthogonal to each other, as well as cases where the fitting direction A and the stacking direction B are not orthogonal to each other but are recognized as being substantially orthogonal to each other.

In the present embodiment, the electrical storage elements 13 may be suitable electrical storage elements 13, such as secondary batteries, capacitors, or condensers, as needed. The electrical storage elements 13 according to the present embodiment are secondary batteries.

Each electrical storage element 13 is substantially rectangular when viewed from above. The electrical storage element 13 has a main body 15 that is formed by melting and adhering side edges of a pair of substantially rectangular laminated films, an electrical storage component that is not shown and is accommodated within the main body 15, and lead terminals 16 that are connected to the electrical storage component within the main body 15, and are led out to the outside from the short sides of the main body 15 that is substantially rectangular when viewed from above. The polarity of the lead terminal 16 that is led out from one short side of the main body 15 is different from the polarity of the lead terminal 16 that is led out from the other short side.

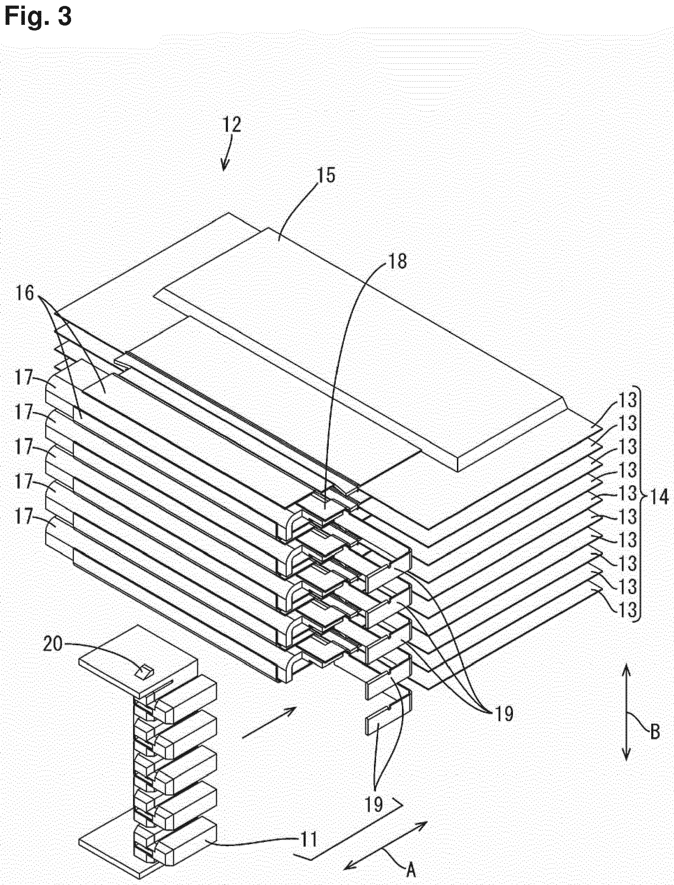

As shown in FIG. 3, the electrical storage elements 13 stacked in the stacking direction B are connected in series or in parallel to each other by the lead terminals 16 of the electrical storage elements 13 being connected to each other via metal busbars 17. In the present embodiment, the electrical storage elements 13 stacked in the stacking direction B are connected in series to each other by the lead terminals 16 having different polarities being connected to each other via the busbars 17. The busbars 17 and the lead terminals 16 can be connected to each other by a well-known method such as welding, soldering, or brazing.

Voltage detecting busbars 18 that are made of metal and are configured to detect a voltage of the electrical storage elements 13 are connected to the respective busbars 17 by a well-known method such as welding, soldering, or brazing. Each voltage detecting busbar 18 has an offset-shaped part that is bent at a right angle, and an end of the offset-shaped part is further bent at a right angle. The end of the voltage detecting busbar 18 is provided with an elongated plate-shaped tab 19 that is inserted into the counterpart connector 11. The tabs 19 protrude in the fitting direction A.

### Counterpart Connector 11

As shown in FIG. 3, the counterpart connector 11 is made of a synthetic resin, and has a shape that is elongated in the stacking direction B. The counterpart connector 11 has, at the upper end thereof in the stacking direction B, an upper-side locked section 20 that protrudes upward, and has, at the lower end thereof in the stacking direction B, a lower-side locked section 21 that protrudes downward.

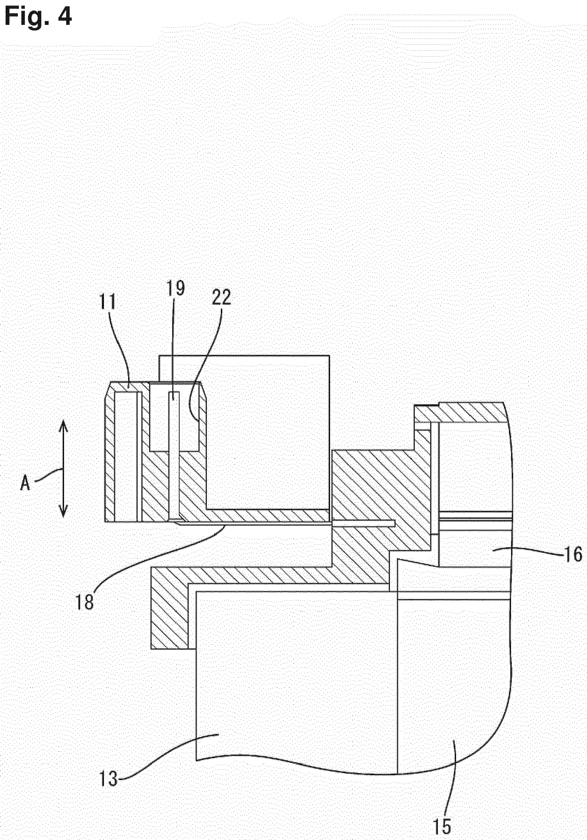

The counterpart connector 11 has a plurality of (five, in the present embodiment) cavities 22 in which the tabs 19 are respectively received, and that extend in the fitting direction A. The cavities 22 are lined up in the stacking direction B. As shown in FIG. 4, each tab 19 penetrates the back wall of the corresponding cavity 22 and is arranged in the cavity 22.

The counterpart connector 11 has tapered surfaces 23 that are formed by rounding the front end edge sections thereof in the fitting direction A, and that have a diameter that decreases toward the end edge of the counterpart connector 11.

### Stacked Connector 10

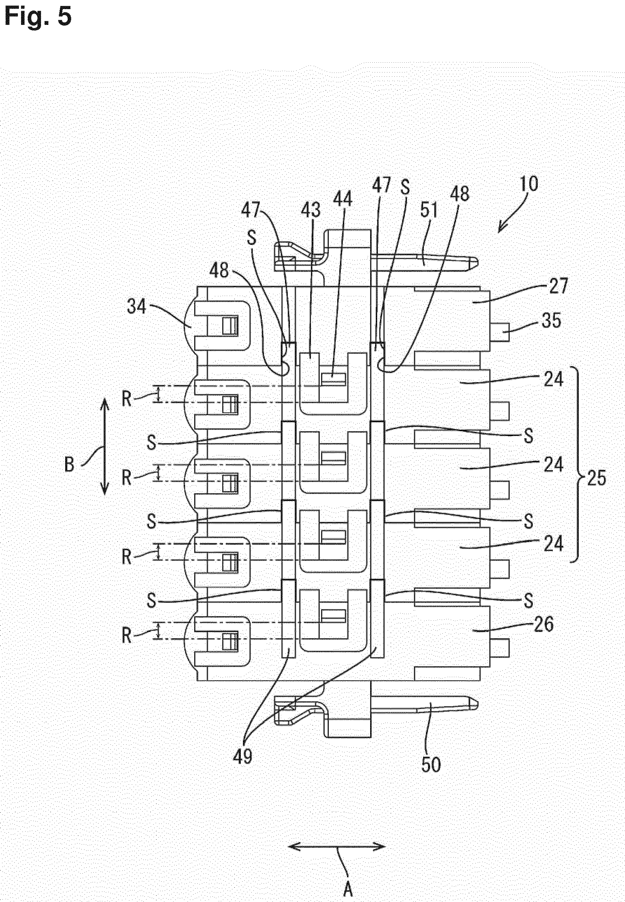

As shown in FIG. 5, the stacked connector 10 includes a plurality of (three, in the present embodiment) first sub housings 24 that are stacked in the stacking direction B that crosses the fitting direction A in which the stacked connector 10 is fitted to the counterpart connector 11. The plurality of first sub housings 24 constitute a first sub-housing group 25 by being lined up in the stacking direction B. The stacking direction B according to the present embodiment is set to a direction that is orthogonal to the fitting direction A.

At one end (lower end section in FIG. 5) of the first sub-housing group 25, a second sub housing 26 is overlapped with the lower side thereof in the stacking direction B. Furthermore, at the other end (upper end section in FIG. 5) of the first sub-housing group 25, a third sub housing 27 is overlapped with the upper side thereof in the stacking direction B.

### First Sub Housing 24

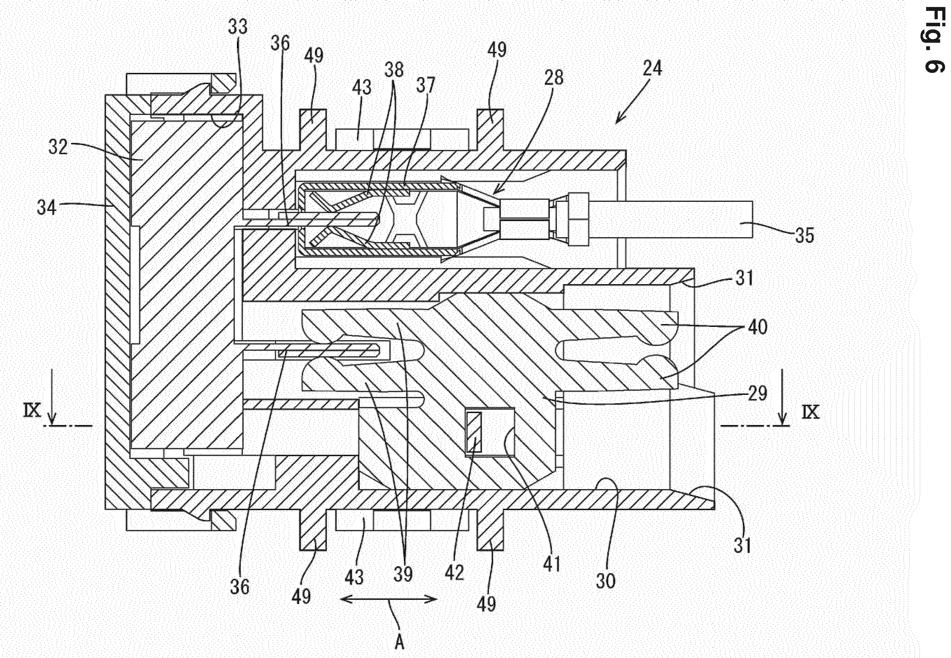

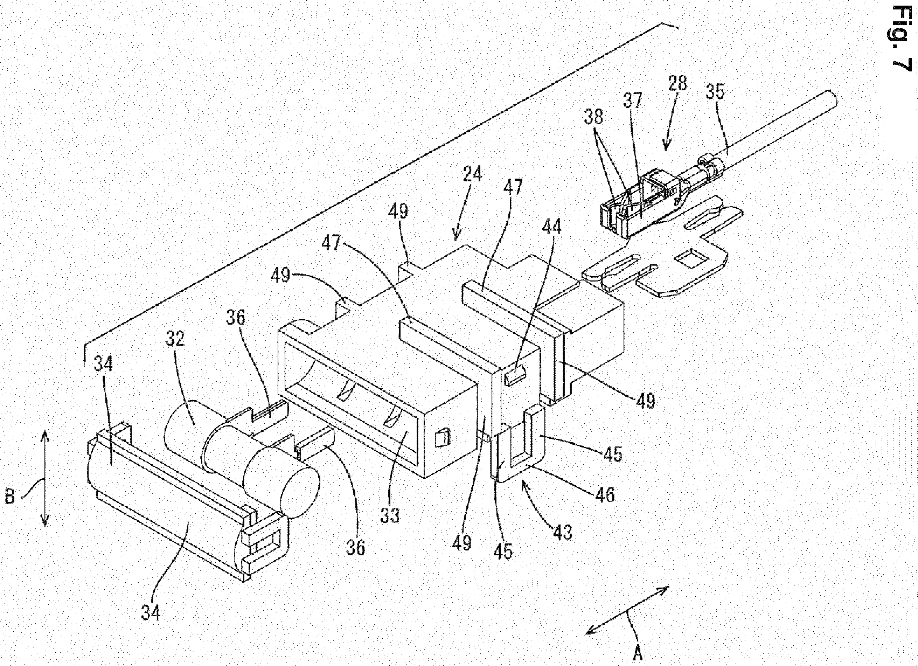

As shown in FIGS. 6 and 7, each first sub housing 24 is made of a synthetic resin, and has cavities 30 in which a terminal 28 and a relay terminal 29 are respectively received, and that extend in the fitting direction A. The cavity 30 in which the relay terminal 29 is received has, at the front rim section thereof in the fitting direction A, a tapered surface 31 whose diameter increases toward the outside.

The first sub housing 24 has, at the position opposite to the end thereof that is fitted to the counterpart connector 11, a fuse mounting section 33 on which a fuse 32 (an example of an overcurrent protection element) is mounted. A fuse cover 34 for covering the fuse 32 mounted on the fuse mounting section 33 is attached to the first sub housing 24. If an overcurrent flows through the fuse 32, the fuse 32 will melt and break to interrupt the overcurrent.

The terminal 28 is configured to be held in the cavity 30 while being retained by a lance (not shown) formed on the inner wall of the cavity 30 being caught by the terminal 28. The terminal 28 is formed by press processing a metal plate material into a predetermined shape. The terminal 28 is connected to an end of an electric wire 35. The terminal 28 has, at the position opposite to the part thereof that is connected to the electric wire 35, a tubular connection section 37 that is connected to a lead terminal 36 of the fuse 32. Elastic contact pieces 38 that are elastically in contact with the lead terminal 36 are arranged within the connection section 37. By the lead terminal 36 of the fuse 32 and the elastic contact pieces 38 being elastically in contact with each other, the fuse 32 and the terminal 28 are electrically connected to each other.

The relay terminal 29 is formed by press processing a metal plate material into a predetermined shape. The relay terminal 29 has a pair of fuse-side arm sections 39 that are to be connected to a lead terminal 36 of the fuse 32, and a pair of electrical storage element-side arm sections 40 that is to be connected to the tab 19 of the counterpart connector 11.

The relay terminal 29 has an engagement hole 41. The cavity 30 has, at the position on the inner wall thereof that corresponds to the engagement hole 41, an engaging projection section 42 that engages with a hole rim section of the engagement hole 41 in the state in which the relay terminal 29 is arranged at a regular position in the cavity 30. By the engaging projection section 42 engaging with the hole rim section of the engagement hole 41, the relay terminal 29 is held in the cavity 30 while being retained.

### Stacking Engaging Section 43 and Stacking Engaged Section 44

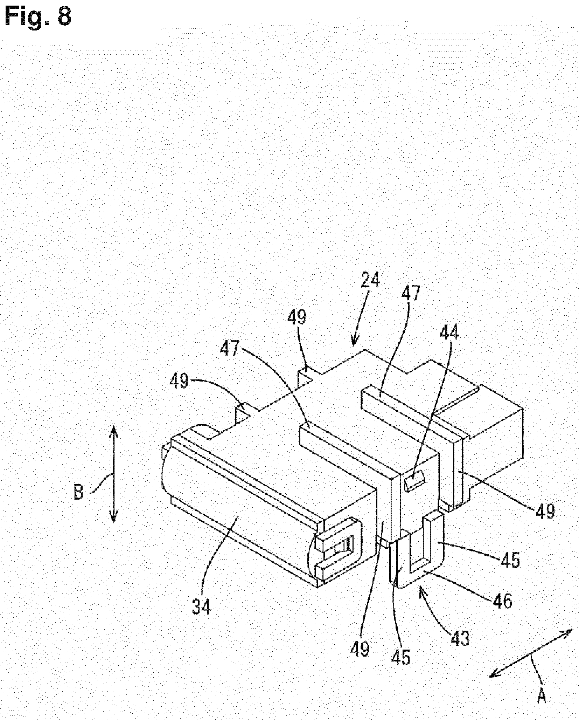

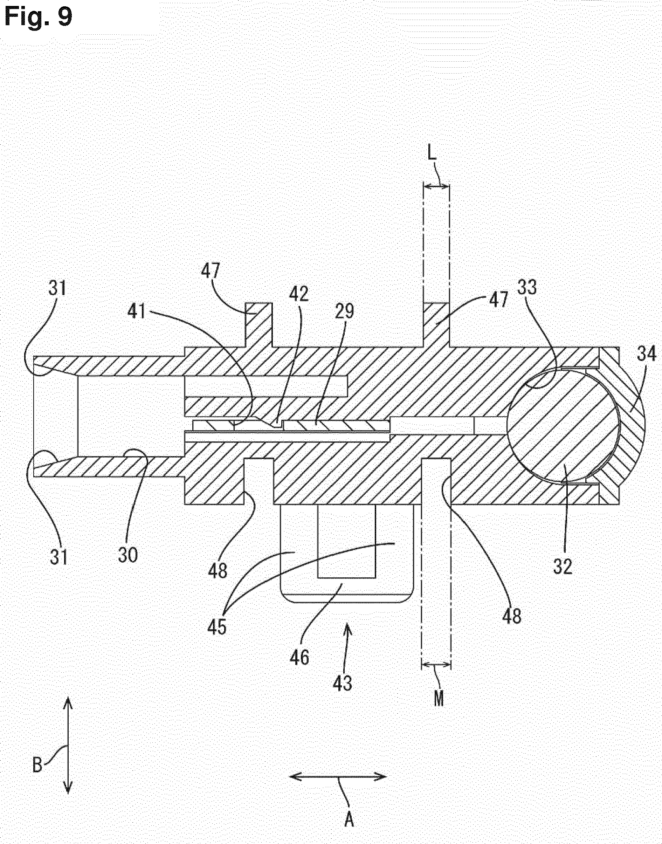

As shown in FIGS. 8 and 9, the first sub housing 24 has, on each of the pair of side walls thereof that extend in the fitting direction A, a stacking engaging section 43 that protrudes in the stacking direction B (downward of FIG. 9). The stacking engaging section 43 is substantially gate-shaped, and has a pair of elastic pieces 45 that extend in the stacking direction B, and a connection section 46, which couples the ends of the pair of elastic pieces 45.

The first sub housing 24 has, on each of the pair of side walls thereof that extend in the fitting direction A, a stacking engaged section 44 that protrudes outward and is to be engaged with the stacking engaging section 43.

When one first sub housing 24 is brought to approach another first sub housing 24 in the stacking direction B, the connection sections 46 of the stacking engaging sections 43 abut on the stacking engaged sections 44. Accordingly, the elastic pieces 45 deform elastically outward. When the one first sub housing 24 is further brought to approach the other first sub housing 24, the elastic pieces 45 deform elastically, and thereby the connection sections 46 slide onto the stacking engaged sections 44. When the one first sub housing 24 is further brought to approach the other first sub housing 24, the connection sections 46 slide over the stacking engaged sections 44 and the elastic pieces 45 deform to recover, and thereby the connection sections 46 of the stacking engaging sections 43 and the stacking engaged sections 44 engage with each other. Accordingly, the one first sub housing 24 and the other first sub housing 24 that are stacked in the stacking direction B are held in a stacked state.

As shown in FIG. 5, in the state in which the stacking engaging sections 43 and the stacking engaged sections 44 are engaged with each other, a stack clearance R between the connection sections 46 of the stacking engaging section 43 and the stacking engaged sections 44 is formed in the stacking direction B. The stack clearance R is set to be larger than a minimum clearance that is required for the stacking engaging sections 43 and the stacking engaged sections 44 to engage with each other. The stack clearance R is set to be equal to or slightly larger than a tolerance, in the stacking direction B, of the stacked electrical storage elements 13.

### Movement Restricting Engaging Section 47 and Movement Restricting Engaged Section 48

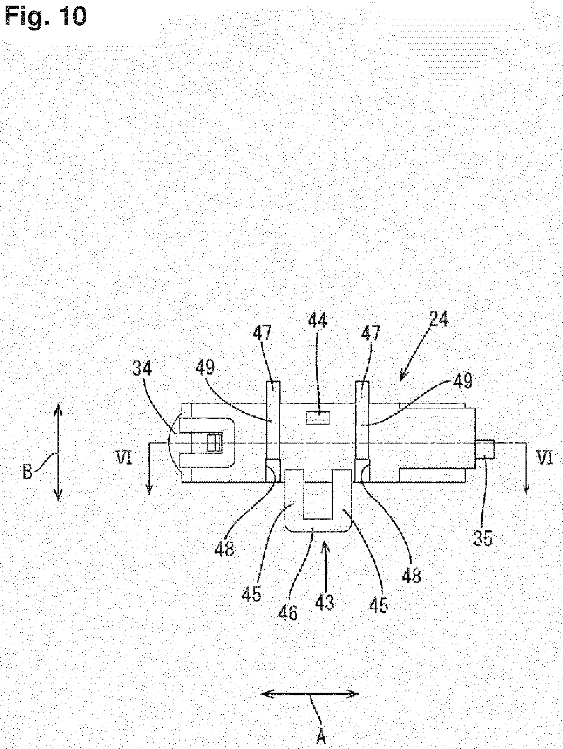

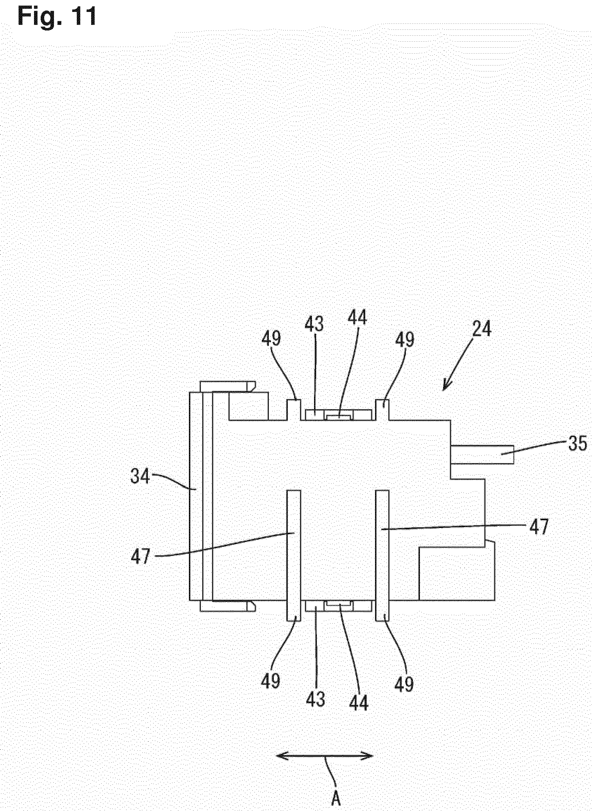

As shown in FIGS. 10 and 11, the first sub housing 24 has, on the upper wall thereof, movement restricting engaging sections 47 that are rib-shaped, protruding in the stacking direction B (upward in FIG. 10) and extending in a direction that crosses the fitting direction A. In the present embodiment, the movement restricting engaging sections 47 extend in a direction that is orthogonal to the fitting direction A. In the present embodiment, two movement restricting engaging sections 47 are formed side by side at a distance in the fitting direction A.

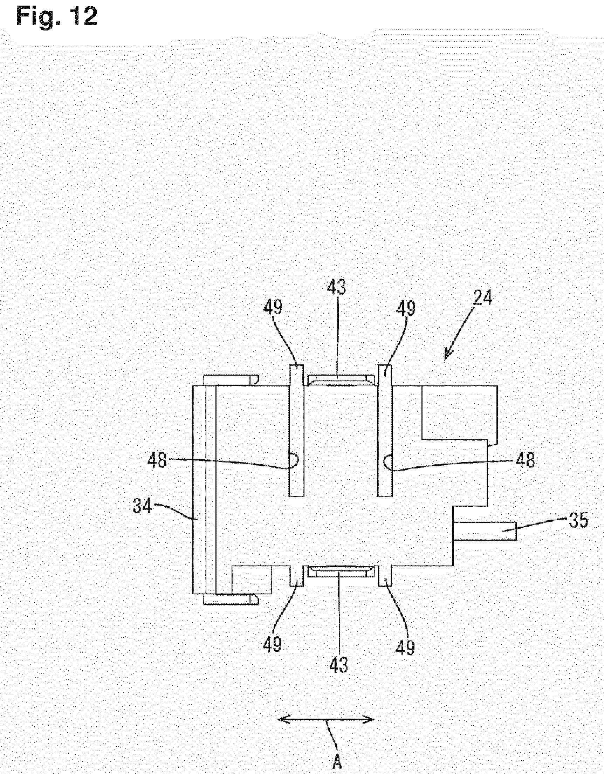

As shown in FIGS. 9 and 12, the first sub housing 24 has, at the positions on the lower wall thereof that correspond to the movement restricting engaging sections 47, movement restricting engaging sections 47 that are respectively to be engaged with the movement restricting engaging sections 47. In the present embodiment, each movement restricting engaged section 48 has the shape of a groove for receiving the corresponding rib-shaped movement restricting engaging section 47.

A width L, in the fitting direction A, of the movement restricting engaging section 47 is set to be slightly smaller than a distance M between the inner walls of the movement restricting engaged section 48. A difference between the width L and the distance M is set to a minimum engagement clearance S that is required for the movement restricting engaging sections 47 and the movement restricting engaged sections 48 to engage with each other.

The engagement clearance S is set to a minimum size with which the movement restricting engaging sections 47 can be received in the movement restricting engaged sections 48, in a case where a plurality of first sub housings 24 that are stacked in the stacking direction B are, for example, manufactured or assembled within a range of a tolerance such as a manufacturing tolerance or an assembling tolerance.

### Rib 49

As shown in FIG. 8, the first sub housing 24 has, on each side wall thereof on which the stacking engaging section 43 and the stacking engaged section 44 are formed, two ribs 49, which are formed at a distance and are located at the positions that sandwich the stacking engaging section 43 and the stacking engaged section 44 from both the front and the rear sides in the fitting direction A. The ribs 49 extend in the stacking direction B.

As shown in FIG. 11, the protrusion height of the ribs 49 that protrude from the side walls of the first sub housing 24 is set to be higher than the protrusion heights of the stacking engaging sections 43 and the stacking engaged sections 44 that protrude outward from the side walls of the first sub housing 24.

### Second Sub Housing 26

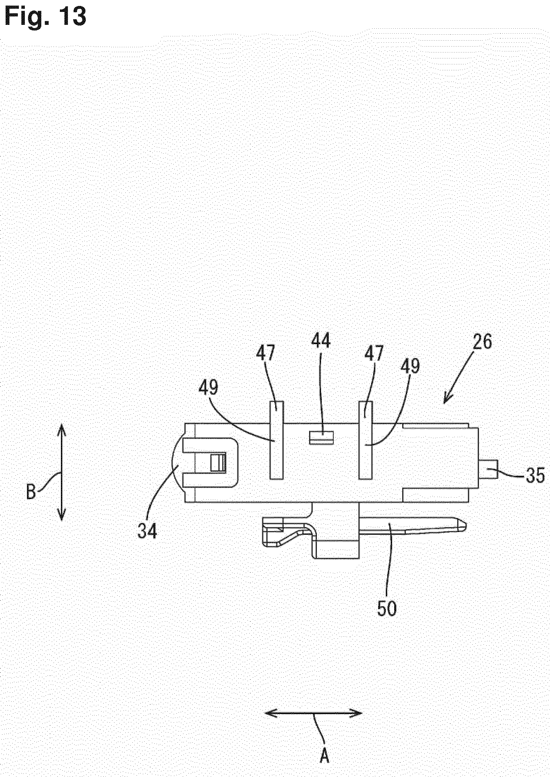

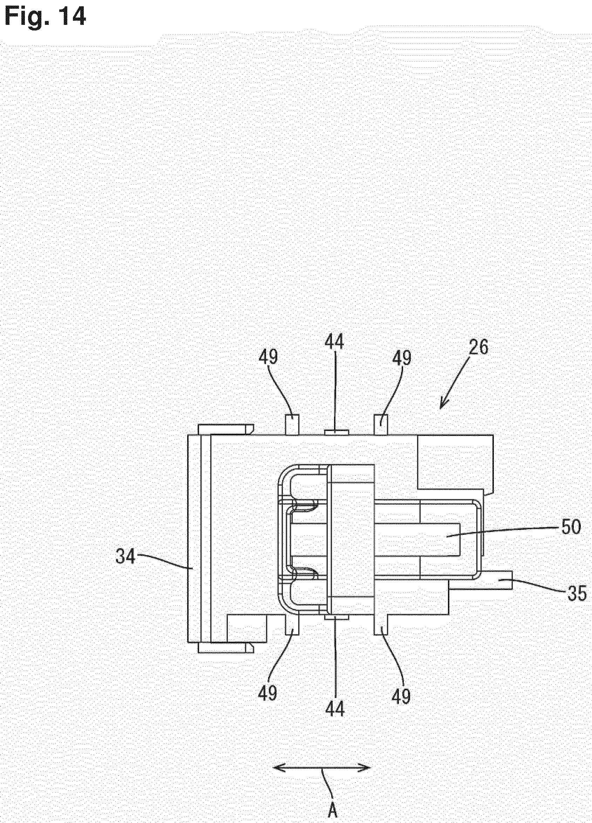

As shown in FIGS. 13 and 14, the second sub housing 26 has, on the lower wall thereof, a lower-side locking section 50 that is to elastically engage with the lower-side locked section 21 of the counterpart connector 11.

### Stacking Engaged Section 44

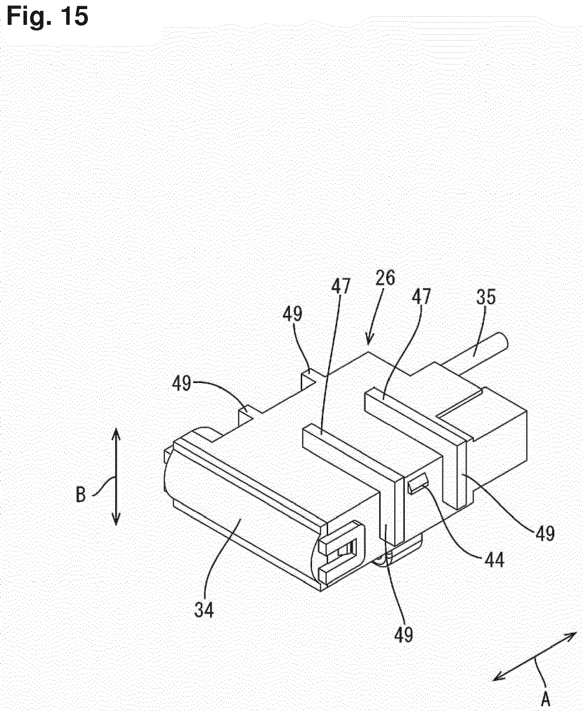

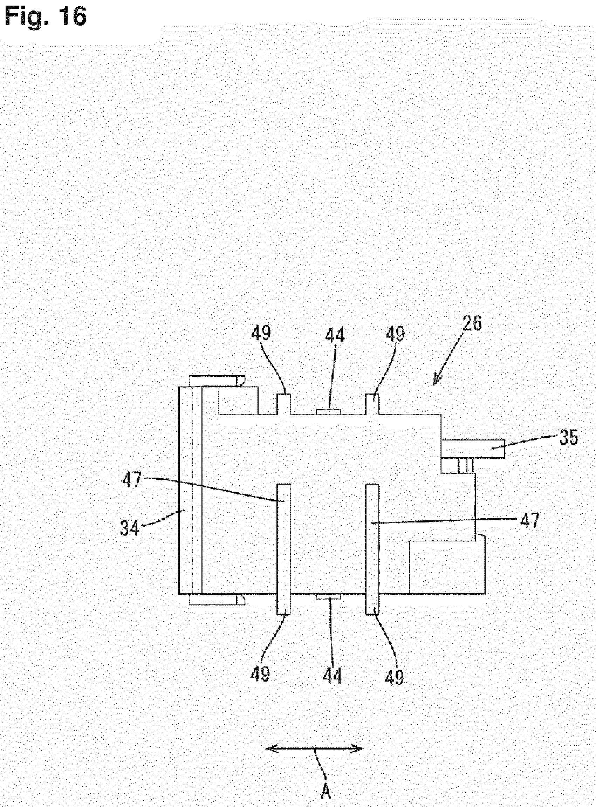

As shown in FIGS. 15 and 16, the second sub housing 26 has, on each of a pair of side walls thereof that extend in the fitting direction A, a stacking engaged section 44 that protrudes outward and is to be engaged with the stacking engaging section 43 of the first sub housing 24 that is overlapped on the upper side in the stacking direction B.

When the first sub housing 24 is brought to approach the second sub housing 26 from above in the stacking direction B, the connection sections 46 of the stacking engaging sections 43 abut on the stacking engaged sections 44. Accordingly, the elastic pieces 45 deform elastically outward. When the first sub housing 24 is further brought to approach the second sub housing 26, the elastic pieces 45 deform elastically, and thereby the connection sections 46 slide onto the stacking engaged sections 44. When the first sub housing 24 is further brought to approach the second sub housing 26, the connection sections 46 slide over the stacking engaged sections 44 and the elastic pieces 45 deform to recover, and thereby the connection sections 46 of the stacking engaging sections 43 and the stacking engaged sections 44 engage with each other. Accordingly, the first sub housing 24 and the second sub housing 26 that are stacked in the stacking direction B are held in the stacked state.

As shown in FIG. 5, in the state in which the stacking engaging sections 43 and the stacking engaged sections 44 are engaged with each other, a stack clearance R in the stacking direction B is formed between the connection sections 46 of the stacking engaging sections 43 and the stacking engaged sections 44. The stack clearance R is set to be larger than the minimum clearance that is required for the stacking engaging sections 43 and the stacking engaged sections 44 to engage with each other. The stack clearance R is set to be equal to or slightly larger than a tolerance, in the stacking direction B, of the stacked electrical storage elements 13.

### Movement Restricting Engaging Section 47

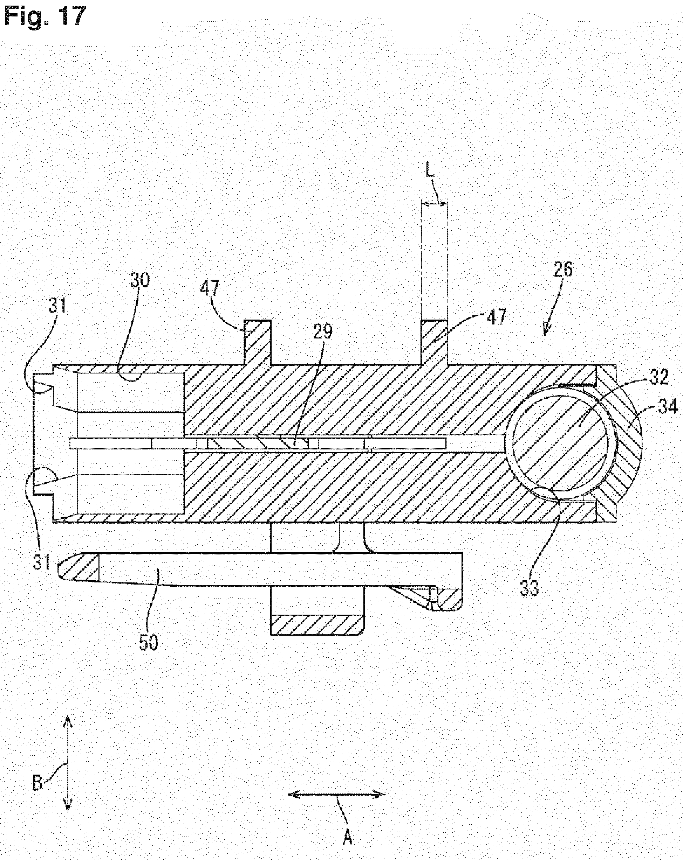

As shown in FIG. 17, the second sub housing 26 has, on the upper wall thereof in the stacking direction B, movement restricting engaging sections 47 that are rib-shaped, protruding in the stacking direction B (upward in FIG. 17) and extending in a direction that crosses the fitting direction A. In the present embodiment, the movement restricting engaging sections 47 extend in a direction that is orthogonal to the fitting direction A. As shown in FIG. 16, in the present embodiment, two movement restricting engaging sections 47 are formed side by side at a distance in the fitting direction A. The movement restricting engaging sections 47 are configured to be received in the movement restricting engaged sections 48 of the first sub housing 24 that is overlapped on the upper side in the stacking direction B.

A width L, in the fitting direction A, of the movement restricting engaging section 47 of the second sub housing 26 is set to be slightly smaller than a distance M between the inner walls of the movement restricting engaged section 48 of the first sub housing 24 that is overlapped on the upper side, in the fitting direction A, of the second sub housing 26. A difference between the width L and the distance M is set to a minimum engagement clearance S that is required for the movement restricting engaging sections 47 and the movement restricting engaged sections 48 to engage with each other.

The engagement clearance S is set to a minimum size with which the movement restricting engaging sections 47 can be received in the movement restricting engaged sections 48, in a case where the first sub housings 24 and the second sub housing 26 that are stacked in the stacking direction B are, for example, manufactured or assembled within a range of a tolerance such as a manufacturing tolerance or an assembling tolerance.

Structures other than those described above are substantially the same as those of the first sub housing 24, and thus like reference numerals are given to like components and redundant descriptions are omitted.

### Third Sub Housing 27

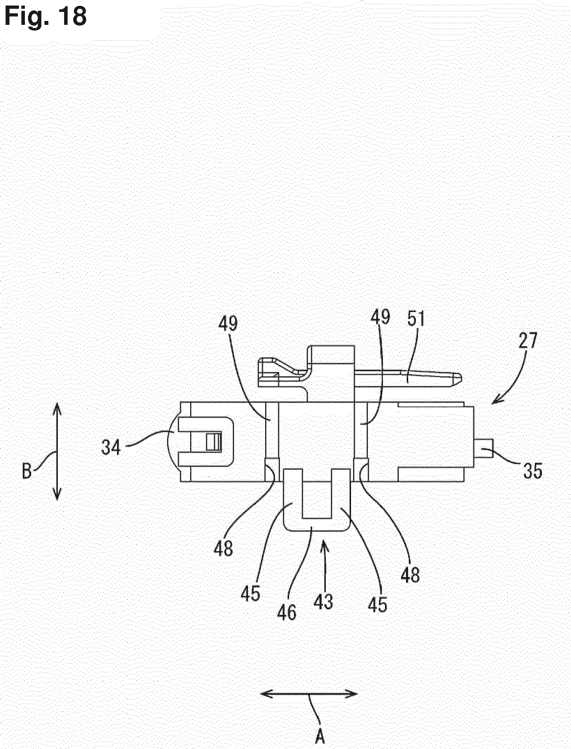

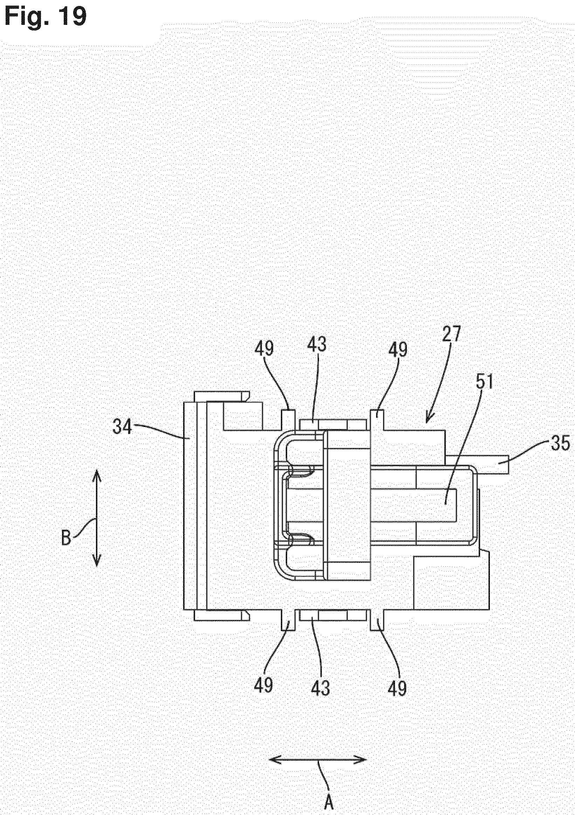

As shown in FIGS. 18 and 19, the third sub housing 27 has, on the upper wall thereof, an upper-side locking section 51 that is to elastically engage with the upper-side locked section 20 of the counterpart connector 11.

### Stacking Engaging Section 43

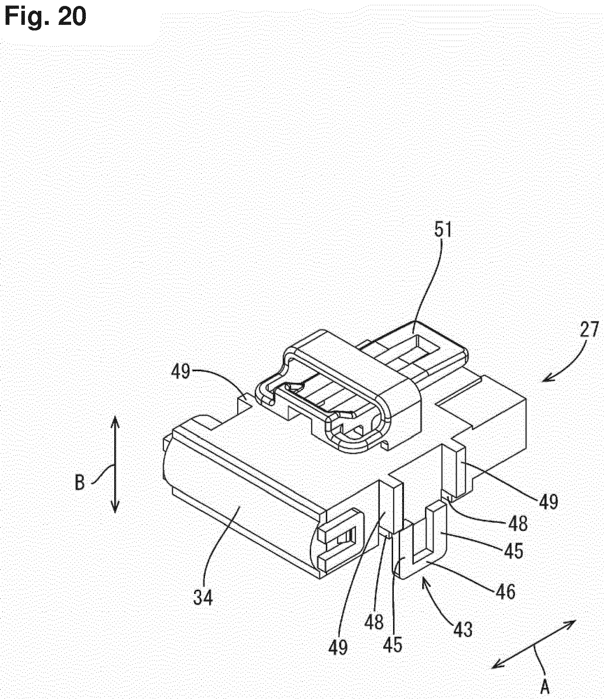

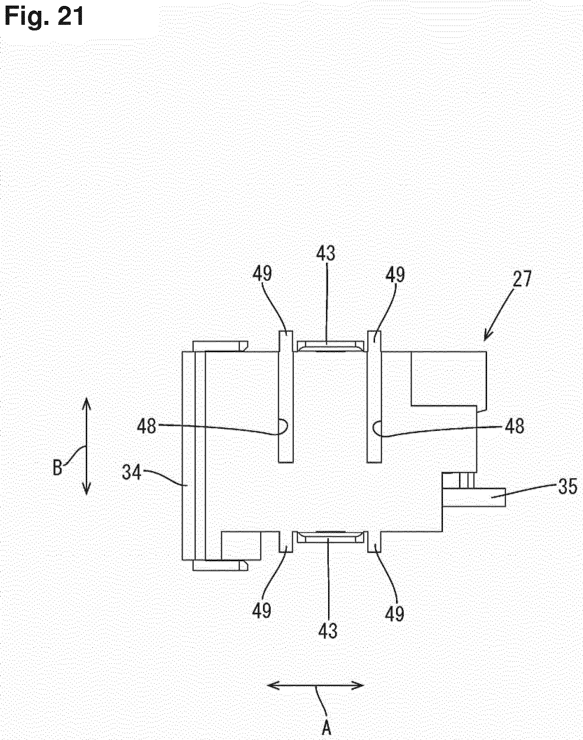

As shown in FIGS. 20 and 21, the third sub housing 27 has, on each of the pair of side walls thereof that extend in the fitting direction A, a stacking engaging section 43 that protrudes in the stacking direction B (downward of FIG. 20). The stacking engaging section 43 is substantially gate-shaped, and has a pair of elastic pieces 45 that extend in the stacking direction B and a connection section 46, which couples the ends of the pair of elastic pieces 45.

When the third sub housing 27 is brought to approach the first sub housing 24 from above in the stacking direction B, the connection sections 46 of the stacking engaging sections 43 abut on the stacking engaged sections 44. Accordingly, the elastic pieces 45 deform elastically outward. When the third sub housing 27 is further brought to approach the first sub housing 24, the elastic pieces 45 deform elastically, and thereby the connection sections 46 slide onto the stacking engaged sections 44. When the third sub housing 27 is further brought to approach the first sub housing 24, the connection sections 46 slide over the stacking engaged sections 44 and the elastic pieces 45 deform to recover, and thereby the connection sections 46 of the stacking engaging sections 43 and the stacking engaged sections 44 engage with each other. Accordingly, the third sub housing 27 and the first sub housing 24 that are stacked in the stacking direction B are held in the stacked state.

As shown in FIG. 5, in the state in which the stacking engaging sections 43 and the stacking engaged sections 44 are engaged with each other, the stack clearance R in the stacking direction B is formed between the connection sections 46 of the stacking engaging sections 43 and the stacking engaged sections 44. The stack clearance R is set to be larger than a minimum clearance that is required for the stacking engaging sections 43 and the stacking engaged sections 44 to engage with each other. The stack clearance R is set to be equal to or slightly larger than a tolerance, in the stacking direction B, of the stacked electrical storage elements 13.

### Movement Restricting Engaged Section 48

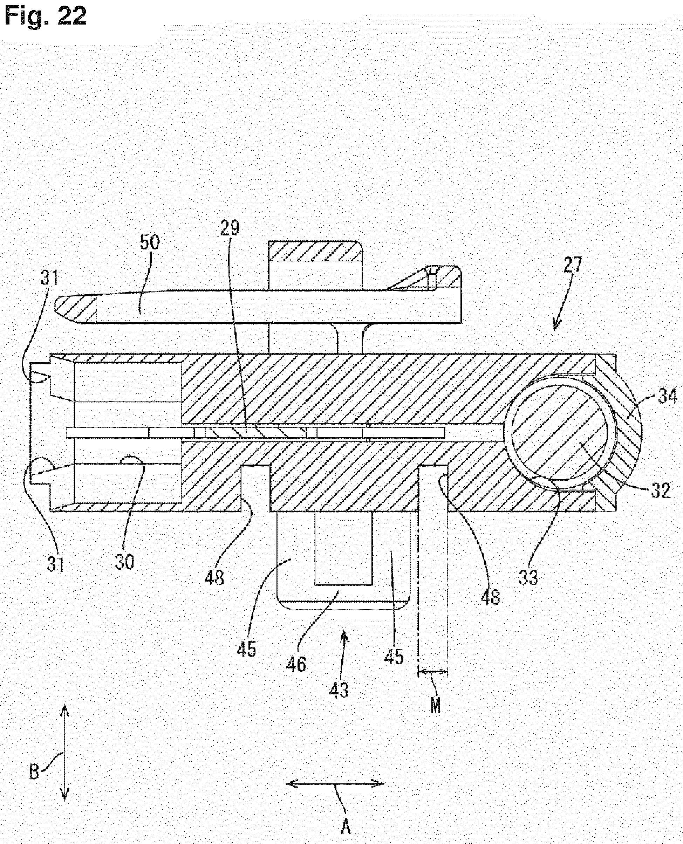

As shown in FIGS. 21 and 22, the third sub housing 27 has, at the positions on the lower wall thereof that correspond to the movement restricting engaging sections 47 of the first sub housing 24 that is overlapped on the lower side in the stacking direction B, movement restricting engaged sections 48 that engage with the movement restricting engaging sections 47. In the present embodiment, each movement restricting engaged section 48 has the shape of a groove for receiving the corresponding rib-shaped movement restricting engaging section 47.

A width L, in the fitting direction A, of the movement restricting engaging section 47 of the first sub housing 24 that is overlapped on the lower side, in the stacking direction B, of the third sub housing 27 is set to be slightly smaller than the distance M between the inner walls of the movement restricting engaged section 48 of the third sub housing 27. A difference between the width L and the distance M is set to a minimum engagement clearance S that is required for the movement restricting engaging sections 47 and the movement restricting engaged sections 48 to engage with each other.

The engagement clearance S is set to a minimum size with which the movement restricting engaging sections 47 can be received in the movement restricting engaged sections 48, in a case where the third sub housing 27 and the first sub housings 24 that are stacked in the stacking direction B are, for example, manufactured or assembled within a range of a tolerance such as a manufacturing tolerance or an assembling tolerance.

Structures other than those described above are substantially the same as those of the first sub housing 24, and thus like reference numerals are given to like components and redundant descriptions are omitted.

### Assembling Process

The following will describe an example of an assembling process of the stacked connector 10 according to the present embodiment. Note that the assembling process of the stacked connector 10 is not limited to the description below. First, the relay terminals 29, and the terminals 28 connected to terminals of the electric wires 35 are received in the cavities 30 of the first sub housings 24, the second sub housing 26, and the third sub housing 27. Then, the fuses 32 are mounted on the fuse mounting sections 33, and the fuse covers 34 are attached thereto.

The first sub housing 24 is overlapped on the second sub housing 26, the stacking engaging sections 43 and the stacking engaged sections 44 are engaged with each other, and the movement restricting engaging sections 47 and the movement restricting engaged sections 48 are engaged with each other. Accordingly, the second sub housing 26 and the first sub housing 24 are held in the state of being stacked in the stacking direction B.

Then, a predetermined number of (two, in the present embodiment) first sub housings 24 are further stacked on the first sub housing 24 by a similar method to that described above. Accordingly, the plurality of (three, in the present embodiment) first sub housings 24 are held in the state of being stacked in the stacking direction B.

Then, the third sub housing 27 is stacked on the first sub housing 24 that is located in the uppermost stage, the stacking engaging sections 43 and the stacking engaged sections 44 are engaged with each other, and the movement restricting engaging sections 47 and the movement restricting engaged sections 48 are engaged with each other. Accordingly, the first sub housings 24 and the third sub housing 27 are held in the state of being stacked in the stacking direction B. The stacked connector 10 is achieved in the above-described way.

### Effects and Advantages of Embodiment

The following will describe effects and advantages of the present embodiment. According to the present embodiment, by engaging the stacking engaging sections 43 and the stacking engaged sections 44 with each other, and engaging the movement restricting engaging sections 47 and the movement restricting engaged sections 48, a suitable number of first sub housings 24 can be stacked in the stacking direction B. Accordingly, even if the number of stacked components of the electrical storage element 13 is changed due to a change in the specification, and the number of stacked components of the stacked connector 10 is changed in order to accommodate that change, it is possible to easily address it.

Furthermore, according to the present embodiment, the second sub housing 26 is overlapped, on the lower side in the stacking direction B, with the lower end, in the stacking direction B, of the group of the first sub housings 24, which is constituted by stacking a plurality of first sub housings 24, the second sub housing 26 having the stacking engaged sections 44 that are engaged with the stacking engaging sections 43 of the first sub housing 24 arranged at the lower end of the first sub-housing group 25. The third sub housing 27 is overlapped, on the upper side in the stacking direction B, with the upper end, in the stacking direction B, of the first sub-housing group 25, the third sub housing 27 having the stacking engaging sections 43 that are engaged with the stacking engaged sections 44 of the first sub housing 24 arranged at the upper end of the first sub-housing group 25.

According to the present embodiment, by increasing or decreasing the number of the first sub housings 24 that are arranged between the second sub housing 26 and the third sub housing 27, it is possible to accommodate a change in the number of the stacked electrical storage elements 13.

Furthermore, according to the present embodiment, as shown in FIG. 5, the stack clearance R between the stacking engaging sections 43 and the stacking engaged sections 44 is set in the stacking direction B, and thus, when a plurality of electrical storage elements 13 connected to the counterpart connector 11 are stacked, it is possible to absorb a stack tolerance between the plurality of electrical storage elements 13 in the stacking direction B. The stack tolerance includes a manufacturing tolerance of the electrical storage elements 13, an assembling tolerance when they are stacked, and a change in thickness of the electrical storage elements 13 in the stacking direction B due to expansion and contraction that are caused when the electrical storage elements 13 are charged and discharged.

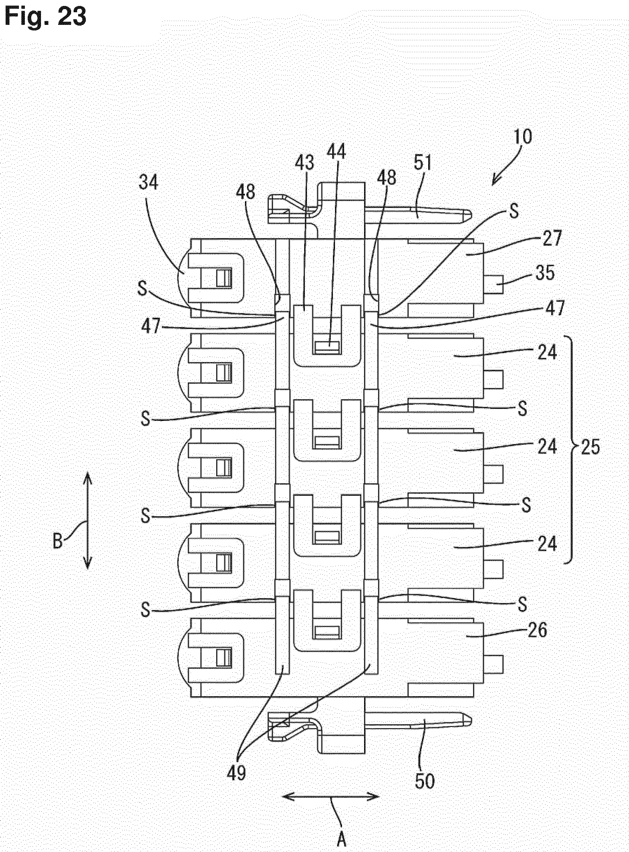

More specifically, FIG. 5 shows the state in which all the stacking engaging sections 43 and stacking engaged sections 44 are engaged with each other at the stack clearance R. In this state, the length, in the stacking direction B, of the stacked connector 10 is the smallest. On the other hand, FIG. 23 shows the state in which all the stacking engaging sections 43 and stacking engaged sections 44 are engaged with each other without the stack clearance R. In this state, the length, in the stacking direction B, of the stacked connector 10 is the greatest. The stacked connector 10 can have a suitable length in the stacking direction B between the state shown in FIG. 5 and the state shown in FIG. 23. Accordingly, it is possible to absorb a stack tolerance, in the stacking direction B, of the counterpart connector 11.

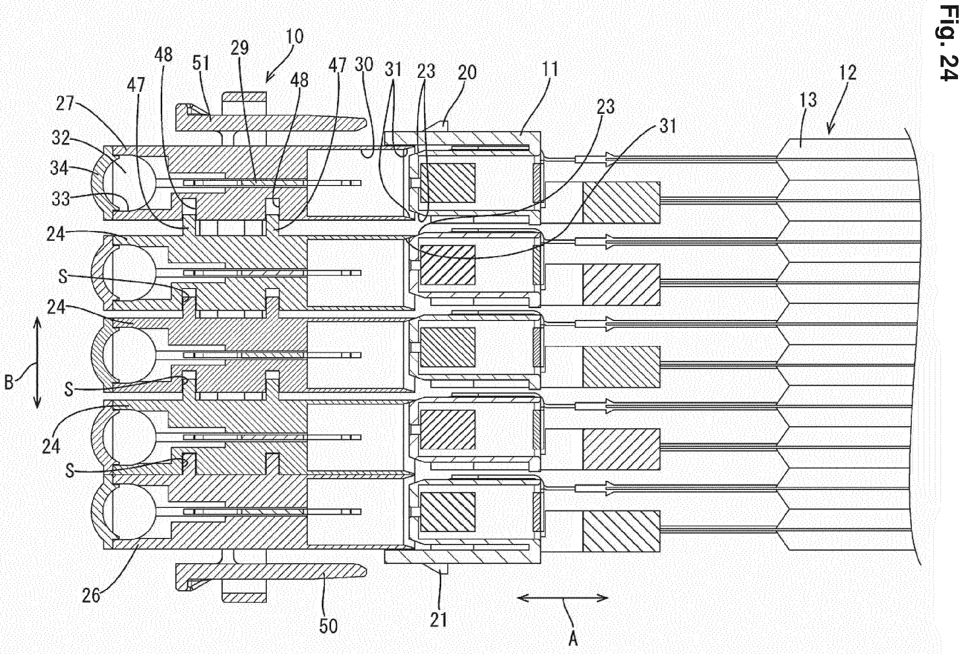

A configuration for absorbing a stack tolerance will be described in detail with reference to FIGS. 24 to 28. First, as shown in FIG. 24, in an initial stage of fitting between the stacked connector 10 and the counterpart connector 11, the tapered surfaces 23 of the counterpart connector 11 abut on the tapered surfaces 31 of the first to third sub housings 24, 26, and 27. Accordingly, the first sub housings 24, the second sub housing 26, and the third sub housing 27 independently move in the stacking direction B within a range of the stack clearance R. Therefore, a stack tolerance, in the stacking direction B, of the plurality of electrical storage element 13 is absorbed.

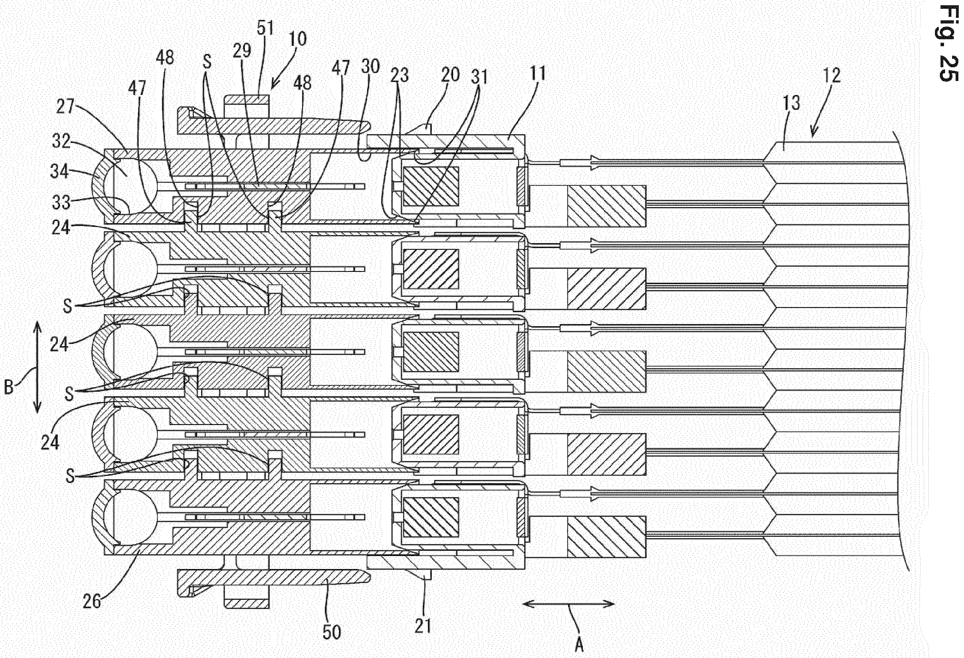

As shown in FIG. 25, in a state in which the fitting between the stacked connector 10 and the counterpart connector 11 has advanced, the counterpart connector 11 has entered the cavities 30 of the first to third sub housings 24, 26, and 27.

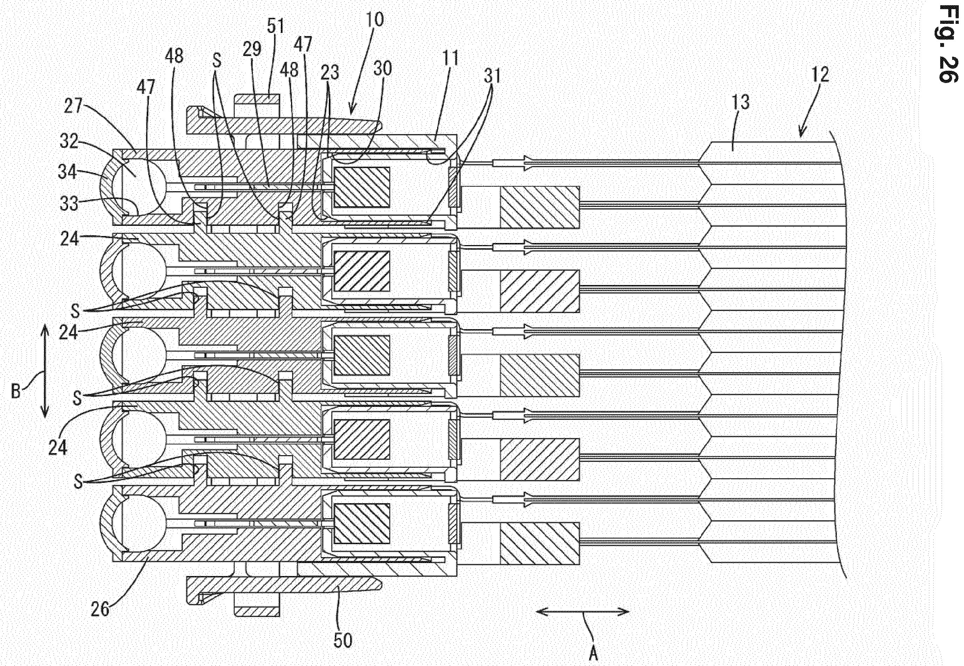

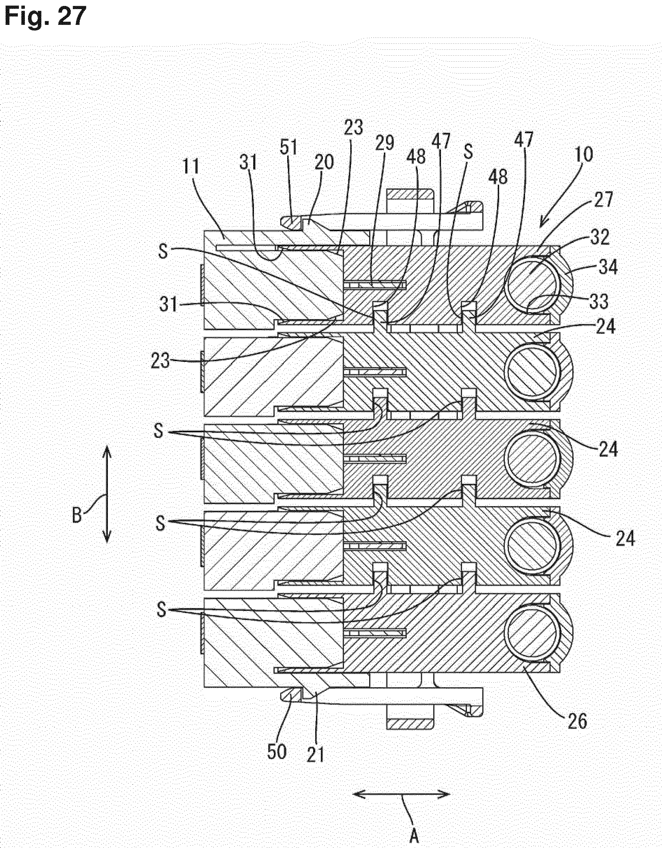

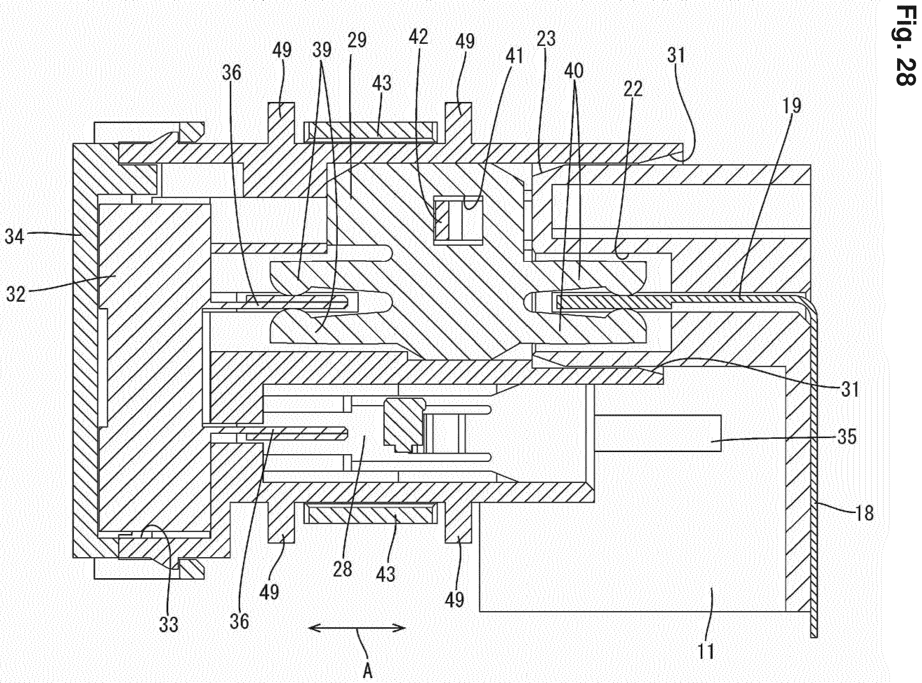

As shown in FIGS. 26 and 27, in a state in which the fitting between the stacked connector 10 and the counterpart connector 11 is complete, the upper-side locking section 51 of the stacked connector 10 and the upper-side locked section 20 of the counterpart connector 11 are engaged with each other, and the lower-side locking section 50 of the stacked connector 10 and the lower-side locked section 21 of the counterpart connector 11 are engaged each other, and thereby the stacked connector 10 is engaged with the counterpart connector 11 in a state of being retained. Accordingly, as shown in FIG. 28, the counterpart connector 11 and the stacked connector 10 are electrically connected to each other.

Furthermore, in the present embodiment, the minimum engagement clearance S that is required for the movement restricting engaging sections 47 and the movement restricting engaged sections 48 to engage with each other is set, in the fitting direction A, between the movement restricting engaging sections 47 and the movement restricting engaged sections 48. Accordingly, it is possible to restrict the first sub housings 24 from moving in the fitting direction A. As a result, it is possible to improve the reliability of electrical connection between the counterpart connector 11 and the stacked connector 10.

The above-described effects and advantages will be described in detail. In the state shown in FIG. 25 above, the tapered surfaces 23 of the counterpart connector 11 abut on the tapered surfaces 31 of the first to third sub housings 24, 26, and 27 in the fitting direction A. Accordingly, a force in a direction in which the first to third sub housings 24, 26, and 27 are pressed from the counterpart connector 11 in the fitting direction A is applied to the first to third sub housings 24, 26, and 27. Accordingly, there is a risk that the first to third sub housings 24, 26, and 27 move in the fitting direction A.

In the present embodiment, the movement restricting engaging sections 47 are engaged with the movement restricting engaged sections 48 in the fitting direction A, and thus the first to third sub housings 24, 26, and 27 are restricted from moving in the fitting direction A. Accordingly, since the minimum engagement clearance S required for the movement restricting engaging sections 47 and the movement restricting engaged sections 48 to engage with each other is set between the movement restricting engaging sections 47 and the movement restricting engaged sections 48, it is possible to minimize the amount of movement of the first to third sub housings 24, 26, and 27 in the fitting direction A. As a result, it is possible to improve the reliability in the electrical connection between the counterpart connector 11 and the stacked connector 10.

Furthermore, by the movement restricting engaging sections 47 being received in the inside of the movement restricting engaged sections 48, the movement restricting engaged sections 48 function as guides for the movement of the first to third sub housings 24, 26, and 27 in the stacking direction B.

Note that, if the design in which no engagement clearance S in the fitting direction A is provided between the movement restricting engaging section 47 and the movement restricting engaged section 48 is employed, there is a risk that the movement restricting engaging section 47 and the movement restricting engaged section 48 cannot engage with each other. This is because, even when a plurality of first sub housings 24 are, for example, manufactured or assembled within a range of a tolerance (such as a manufacturing tolerance or an assembling tolerance), there is a risk that, for example, the first sub housings 24 being manufactured or attached with the upper limit of the tolerance causes the problem that the movement restricting engaging sections 47 and the movement restricting engaged sections 48 interfere with each other and cannot engage with each other.

In order to solve the above-described problem, the minimum engagement clearance S that is required for the movement restricting engaging sections 47 and the movement restricting engaged sections 48 to engage with each other is set, in the fitting direction A, between the movement restricting engaging sections 47 and the movement restricting engaged sections 48, taking the tolerance into consideration. Accordingly, it is possible to reliably engage the movement restricting engaging section 47 and the movement restricting engaged section 48 with each other.

In the present embodiment, the stacked connector 10 is provided with the stacking engaging sections 43 and the movement restricting engaging sections 47, which are components different from the stacking engaging sections 43, and the stacked connector 10 is also provided with the stacking engaged sections 44 that engage with the stacking engaging sections 43 in the stacking direction B, and the movement restricting engaged sections 48, which are components different from the stacking engaged sections 44 and engage with the movement restricting engaging sections 47 in the fitting direction A.

According to the above-described configuration, by engaging the stacking engaging sections 43 and the stacking engaged sections 44 with each other in the stacking direction B, it is possible to hold a plurality of first sub housings 24 in the stacking direction B in a state in which they are stacked. Furthermore, by engaging the movement restricting engaging sections 47 and the movement restricting engaged sections 48 with each other in the fitting direction A, it is possible to restrict a plurality of first sub housings 24 from moving in the fitting direction A.

Thus, according to the above-described aspect, it is possible to assign the function of holding a plurality of first sub housings 24 in the stacking direction B in the state in which they are stacked, and the function of restricting the plurality of first sub housings 24 from moving in the fitting direction A, to different members. Accordingly, it is possible to reliably hold the plurality of first sub housings 24 in the state in which they are stacked, and to reliably restrict the first sub housings 24 from moving in the fitting direction A.

Furthermore, according to the present embodiment, the movement restricting engaging sections 47 are rib-shaped, protruding in the stacking direction B and extending in a direction that crosses the fitting direction A, and the movement restricting engaged sections 48 are formed at positions that correspond to the movement restricting engaging sections 47, and each have the shape of a groove for receiving the corresponding movement restricting engaging section 47.

By making the movement restricting engaging section 47 rib-shaped as described above, it is possible to restrict the movement restricting engaging sections 47 from deforming when the movement restricting engaging sections 47 and the movement restricting engaged sections 48 abut on each other in the fitting direction A. Accordingly, it is possible to reliably restrict the first sub housings 24 from moving in the fitting direction A.

Furthermore, in the present embodiment, the second sub housing 26 and the third sub housing 27 have the locking sections, which respectively lock the locked sections formed on the counterpart connector 11.

According to the above-described configuration, since the second sub housing 26 arranged at one end of the first sub-housing group 25, and the third sub housing 27 arranged at the other end are respectively provided with the locking sections, it is possible to reliably hold the counterpart connector 11 and the stacked connector 10 in a state in which they are fitted to each other.

Furthermore, according to the present embodiment, the fuses 32 are respectively arranged on the first sub housings 24, the second sub housing 26, and the third sub housing 27. Accordingly, it is possible to prevent an overcurrent from flowing to the counterpart connector 11 through conductive paths provided on the downstream side with respect to the first sub housings 24, the second sub housing 26, and the third sub housing 27.

### Embodiment 2

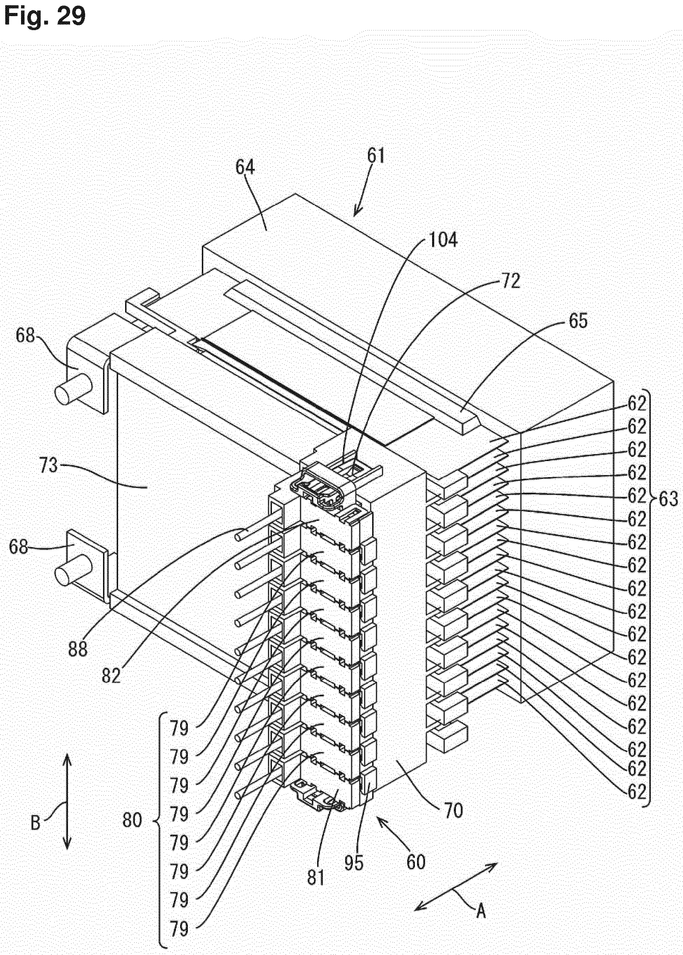

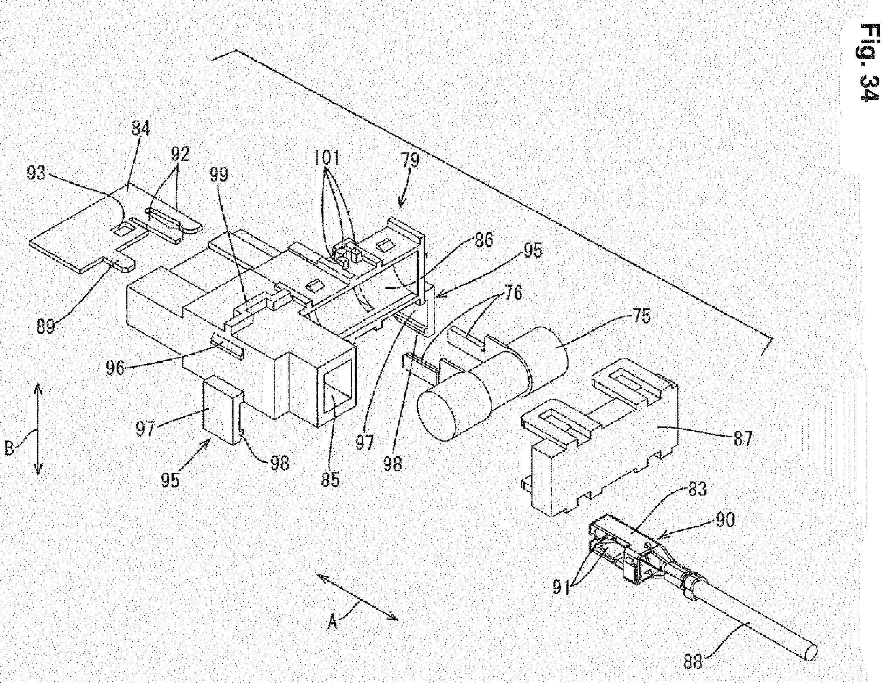

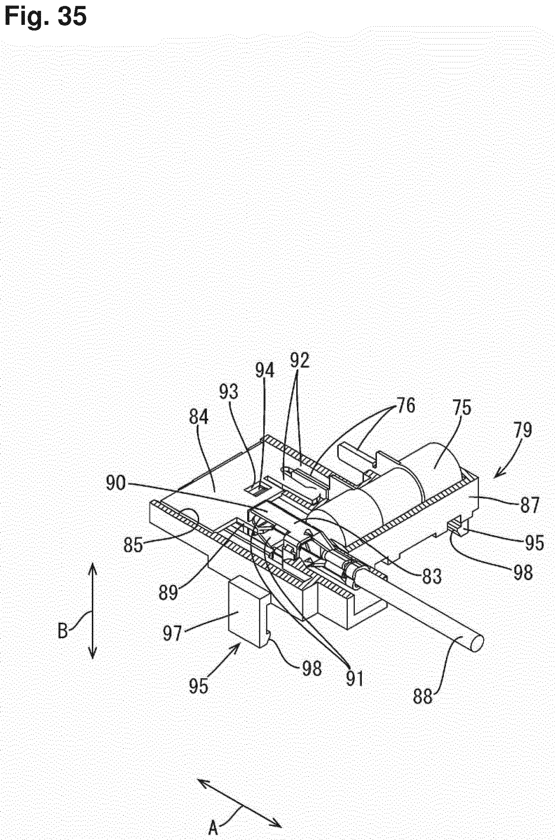

Hereinafter, a stacked connector 60 according to Embodiment 2 of the present invention will be described with reference to FIGS. 29 to 48.

### Electrical Storage Module 61

As shown in FIG. 29, an electrical storage module 61 includes an electrical storage element group 63 in which a plurality of (eighteen, in the present embodiment) electrical storage elements 62 are stacked in a stacking direction B that crosses a fitting direction A. The electrical storage elements 62 are held by a holder 64 while being stacked. In the present embodiment, the fitting direction A and the stacking direction B are substantially orthogonal to each other. Note that "substantially orthogonal" includes cases where the fitting direction A and the stacking direction B are orthogonal to each other, as well as cases where the fitting direction A and the stacking direction B are not orthogonal to each other but are recognized as being substantially orthogonal to each other.

Each electrical storage element 62 is substantially rectangular when viewed from above. The electrical storage element 62 has a main body 65 that is formed by melting and adhering side edges of a pair of substantially rectangular laminated films, an electrical storage component that is not shown and is accommodated within the main body 65, and lead terminals 66 that are connected to the electrical storage component within the main body 65, and are led out to the outside from the short sides of the main body 65 that is substantially rectangular when viewed from above. The polarity of the lead terminal 66 that is led out from one short side of the main body 65 is different from the polarity of the lead terminal 66 that is led out from the other short side.

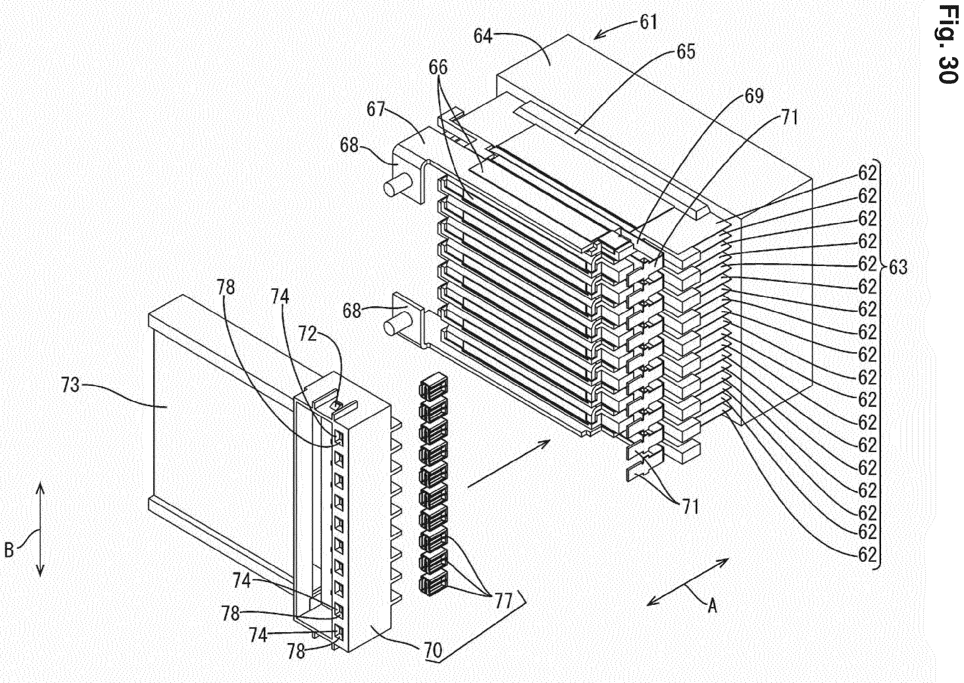

As shown in FIG. 30, the electrical storage elements 62 stacked in the stacking direction B are connected in series or in parallel to each other by the lead terminals 66 of the electrical storage elements 62 being connected to each other via metal busbars 67. In the present embodiment, the electrical storage elements 62 stacked in the stacking direction B are connected in series to each other by the lead terminals 66 having different polarities being connected to each other via the busbars 67. The busbars 67 and the lead terminals 66 can be connected to each other by a well-known method such as welding, soldering, or brazing.

The busbar 67 located in the uppermost stage in the stacking direction B has, at an end thereof, a power terminal 68 to which an electrical power line (not shown) for connecting the electrical storage module 61 and an external device that is not shown is to be connected.

Furthermore, the busbar 67 located in the lowermost stage in the stacking direction B also has, at an end thereof, the power terminal 68 to which an electrical power line (not shown) for connecting the electrical storage module 61 and an external device that is not shown is to be connected.

Voltage detecting busbars 69 that are made of metal and are configured to detect a voltage of the electrical storage elements 62 are connected to the respective busbars 67 by a well-known method such as welding, soldering, or brazing. Each voltage detecting busbar 69 has an offset-shaped part that is bent at a right angle, and an end of the offset-shaped part is further bent at a right angle. The end of the voltage detecting busbar 69 is provided with an elongated plate-shaped tab 71 that is inserted into the counterpart connector 70. The tabs 71 protrude in the fitting direction A.

### Counterpart Connector 70

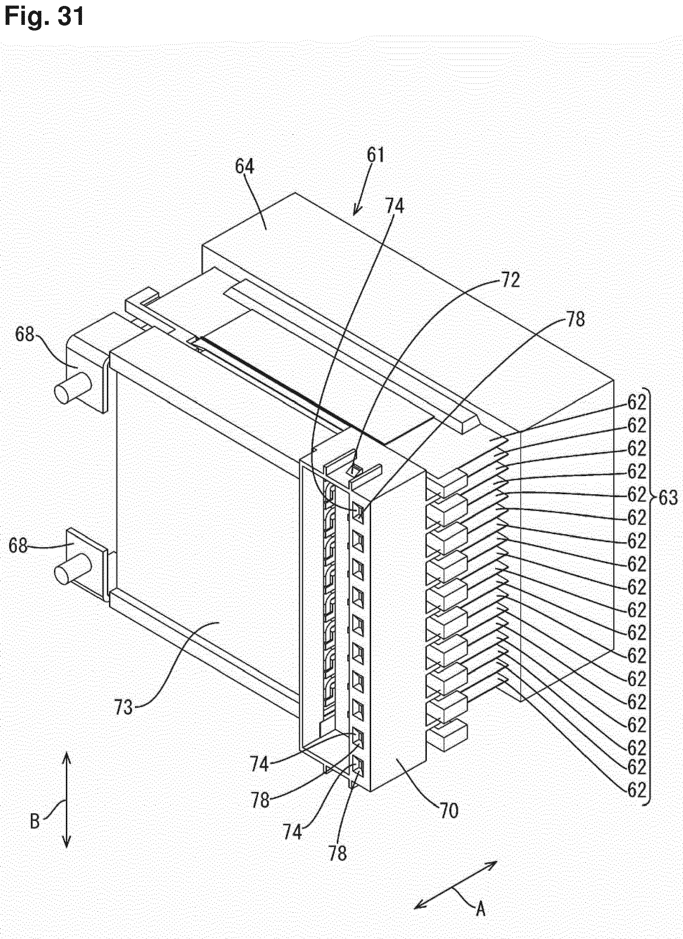

As shown in FIGS. 30 and 31, the counterpart connector 70 is made of a synthetic resin, and has a shape that is elongated in the stacking direction B. The counterpart connector 70 has, at the upper end thereof in the stacking direction B, an upper-side locked section 72 that protrudes upward, and has, at the lower end thereof in the stacking direction B, a lower-side locked section (not shown) that protrudes downward.

An insulation cover 73 for covering the plurality of busbars 67 arranged at intervals in the stacking direction B is formed in one piece with the counterpart connector 70.

The counterpart connector 70 has a plurality of (ten, in the present embodiment) cavities 74 in which the tabs 71 are respectively received, and that extend in the fitting direction A. The cavities 74 are lined up in the stacking direction B. The respective tabs 71 are arranged within the cavities 74. Furthermore, a female-female relay terminal 77 is arranged in each cavity 74, the female-female relay terminal 77 being for electrically connecting the tab 71 and lead terminals 76 of a fuse 75, which will be described later.

The counterpart connector 70 has tapered surfaces 78 that are formed by rounding the front end edge sections thereof in the fitting direction A, and that have a diameter that increases toward the end edge of the counterpart connector 70.

### Stacked Connector 60

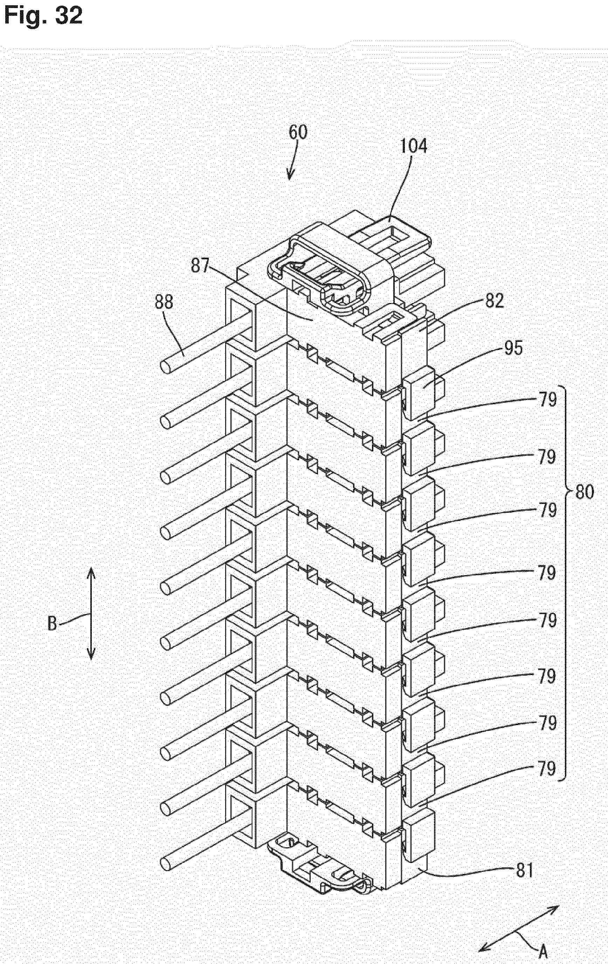

As shown in FIG. 32, the stacked connector 60 includes a plurality of (eight, in the present embodiment) first sub housings 79 that are stacked in the stacking direction B that crosses the fitting direction A in which the stacked connector 60 is fitted to the counterpart connector 70. The plurality of first sub housings 79 constitute a first sub-housing group 80 by being lined up in the stacking direction B. The stacking direction B according to the present embodiment is set to a direction that is orthogonal to the fitting direction A.

At one end (lower end of FIG. 32) of the first sub-housing group 80, a second sub housing 81 is overlapped with the lower side thereof in the stacking direction B. Furthermore, at the other end (upper end of FIG. 32) of the first sub-housing group 80, a third sub housing 82 is overlapped with the upper side thereof in the stacking direction B.

### First Sub Housing 79

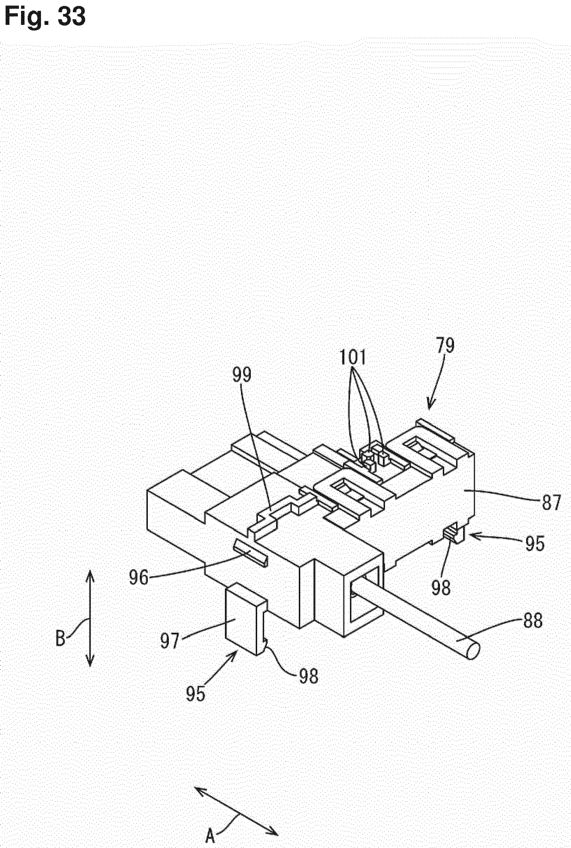

As shown in FIGS. 33 to 35, each first sub housing 79 is made of a synthetic resin, and has cavities 85 in which a terminal 83 and a relay terminal 84 are respectively received, and that extend in the fitting direction A. Furthermore, the first sub housing 79 has, at the position opposite to the end thereof that is fitted to the counterpart connector 70, a fuse mounting section 86 on which the fuse 75 (an example of an overcurrent protection element) is mounted. A fuse cover 87 for covering the fuse 75 mounted on the fuse mounting section 86 is attached to the first sub housing 79. If an overcurrent flows through the fuse 75, the fuse 75 will melt and break to interrupt the overcurrent.

The terminal 83 is configured to be held in the cavity 85 while being retained by a lance (not shown) formed on the inner wall of the cavity 85 being caught by the terminal 83. The terminal 83 is formed by press processing a metal plate material into a predetermined shape. The terminal 83 is connected to an end of an electric wire 88. The terminal 83 has, at the position opposite to the part thereof that is connected to the electric wire 88, a tubular connection section 90 that is connected to a plate-shaped male terminal section 89 of the relay terminal 84. Elastic contact pieces 91 that are elastically in contact with the male terminal section 89 are arranged within the connection section 90. By the male terminal section 89 of the relay terminal 84 and the elastic contact pieces 91 being elastically in contact with each other, the relay terminal 84 and the terminal 83 are electrically connected to each other.

The relay terminal 84 is formed by press processing a metal plate material into a predetermined shape. The relay terminal 84 has a pair of fuse-side arm section 92 that are connected to lead terminals 76 of fuse 75, and a male terminal section 89 that is inserted in the connection section 90 of the terminal 83, and is connected to the terminal 83.

The relay terminal 84 has an engagement hole 93. The cavity 85 has, at the position on the inner wall thereof that corresponds to the engagement hole 93, an engaging projection section 94 that engages with a hole rim section of the engagement hole 93 in the state in which the relay terminal 84 is arranged at a regular position in the cavity 85. By the engaging projection section 94 engaging with the hole rim section of the engagement hole 93, the relay terminal 84 is held in the cavity 85 while being retained.

### Stacking Engaging Section 95 and Stacking Engaged Section 96

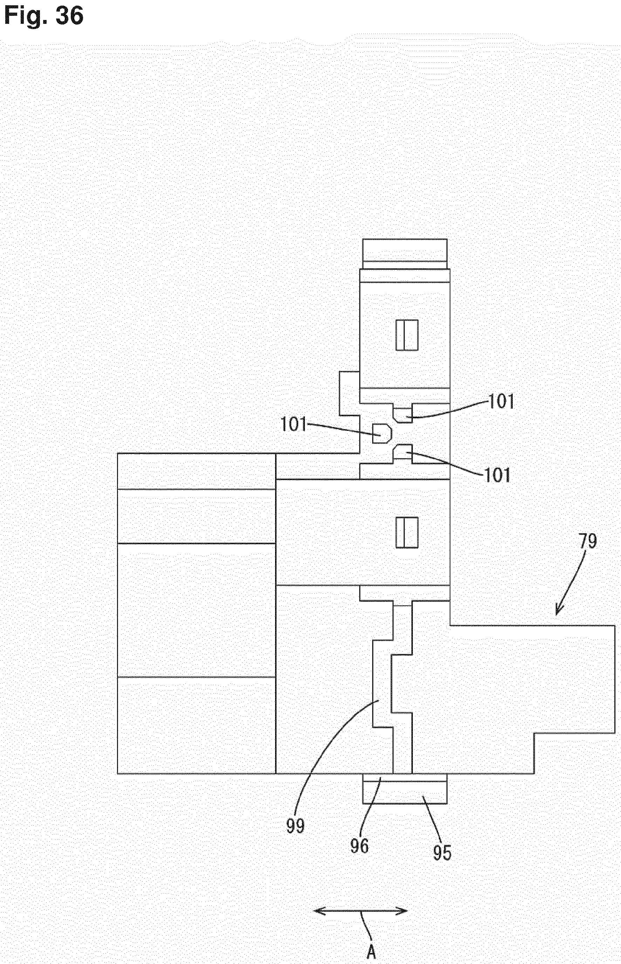

As shown in FIGS. 33 and 36, the first sub housing 79 has, on each of the pair of side walls thereof that extend in the fitting direction A, a stacking engaging section 95 that protrudes in the stacking direction B (downward of FIG. 33). The stacking engaging section 95 has an elastic piece 97 that is plate-shaped extending in the stacking direction B, and a latching claw 98 that protrudes inwardly from the end of the elastic piece 97.

Each first sub housing 79 has, on each of the pair of side walls thereof that extend in the fitting direction A, a stacking engaged section 96 that protrudes outward and is engaged with the stacking engaging section 95 in the fitting direction A.

When one first sub housing 79 is brought to approach another first sub housing 79 in the stacking direction B, the latching claws 98 of the stacking engaging sections 95 abut on the stacking engaged sections 96. Accordingly, the elastic pieces 97 deform elastically outward. When the one first sub housing 79 is further brought to approach the other first sub housing 79, the elastic pieces 97 deform elastically, and thereby the latching claws 98 slide onto the stacking engaged sections 96. When the one first sub housing 79 is further brought to approach the other first sub housing 79, the latching claws 98 slide over the stacking engaged sections 96 and the elastic pieces 97 deform to recover, and thereby the latching claws 98 of the stacking engaging sections 95 and the stacking engaged sections 96 engage with each other. Accordingly, the one first sub housing 79 and the other first sub housing 79 that are stacked in the stacking direction B are held in a stacked state.

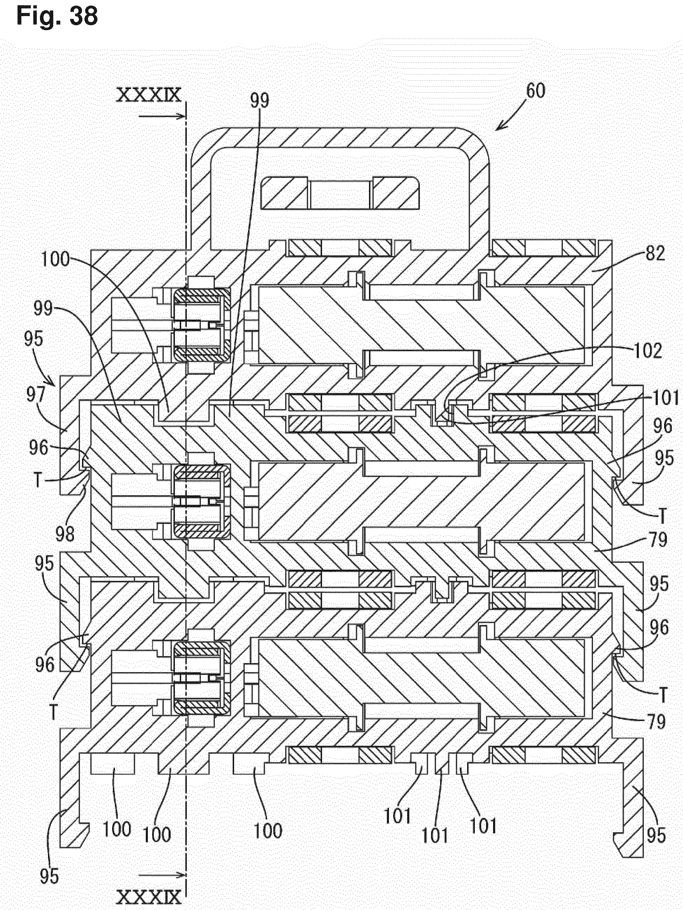

As shown in FIG. 38, in the state in which the stacking engaging sections 95 and the stacking engaged sections 96 are engaged with each other, a stack clearance T between the latching claws 98 of the stacking engaging sections 95 and the stacking engaged sections 96 is formed in the stacking direction B. The stack clearance T is set to be larger than a minimum clearance that is required for the stacking engaging sections 95 and the stacking engaged sections 96 to engage with each other. The stack clearance T is set to be equal to or slightly larger than a tolerance, in the stacking direction B, of the stacked electrical storage elements 62.

### Movement Restricting Engaging Section and Movement Restricting Engaged Section

As shown in FIGS. 33 and 36, the first sub housing 79 has, on the upper wall thereof, a rib-shaped engaging section 99 (an example of the movement restricting engaging section) that protrudes in the stacking direction B (upper side of FIG. 33) and extending in a direction that crosses the fitting direction A. In the present embodiment, the rib-shaped engaging section 99 extends in the direction orthogonal to the fitting direction A. The rib-shaped engaging section 99 according to the present embodiment bulges to the front in the fitting direction A in the shape of a protrusion in the vicinity of the central section thereof in the direction orthogonal to the fitting direction A, and is bent when viewed from above.

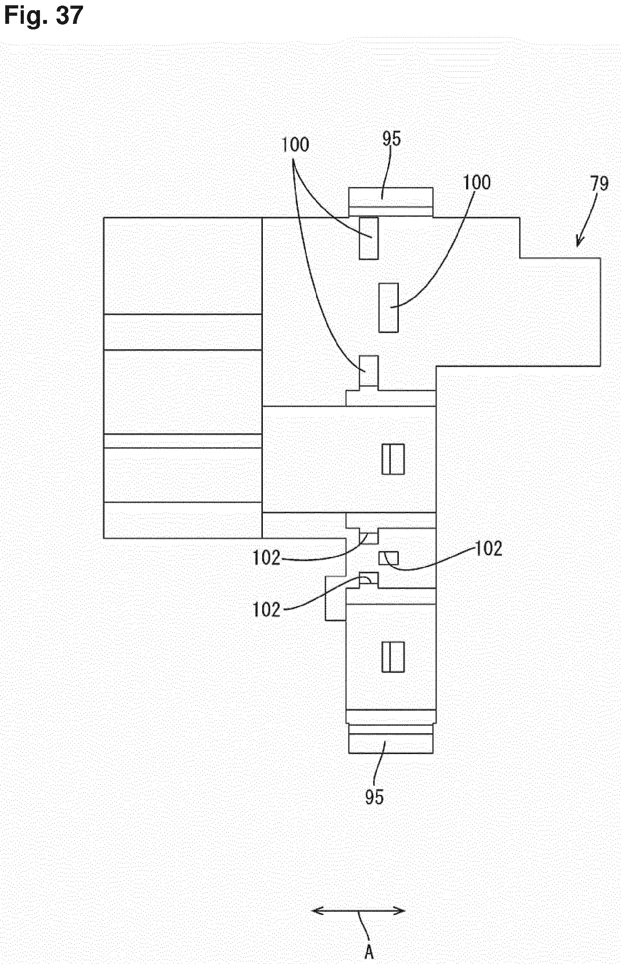

As shown in FIG. 37, the first sub housing 79 has, at the positions on the lower wall thereof that correspond to the rib-shaped engaging section 99, rib-shaped engaged sections 100 (an example of the movement restricting engaged section) that are engaged with the rib-shaped engaging section 99. In the present embodiment, the rib-shaped engaged sections 100 are rib-shaped extending in a direction orthogonal to the fitting direction A, and are located at the positions that correspond to the sections of the rib-shaped engaging section 99 that extend in the direction orthogonal to the fitting direction A.

Furthermore, the first sub housing 79 has, on the upper wall thereof, three columnar engaging sections 101 (an example of the movement restricting engaging section) that are columnar and protrude in the stacking direction B (upward of FIG. 33).

Furthermore, the first sub housing 79 has, at the positions on the lower wall thereof that correspond to the columnar engaging sections 101, hole-like engaged sections 102 in which the columnar engaging sections 101 are respectively received (an example of the movement restricting engaged section). In the present embodiment, the hole-like engaged sections 102 are recessed in the fitting direction A at positions that correspond to the columnar engaging sections 101.

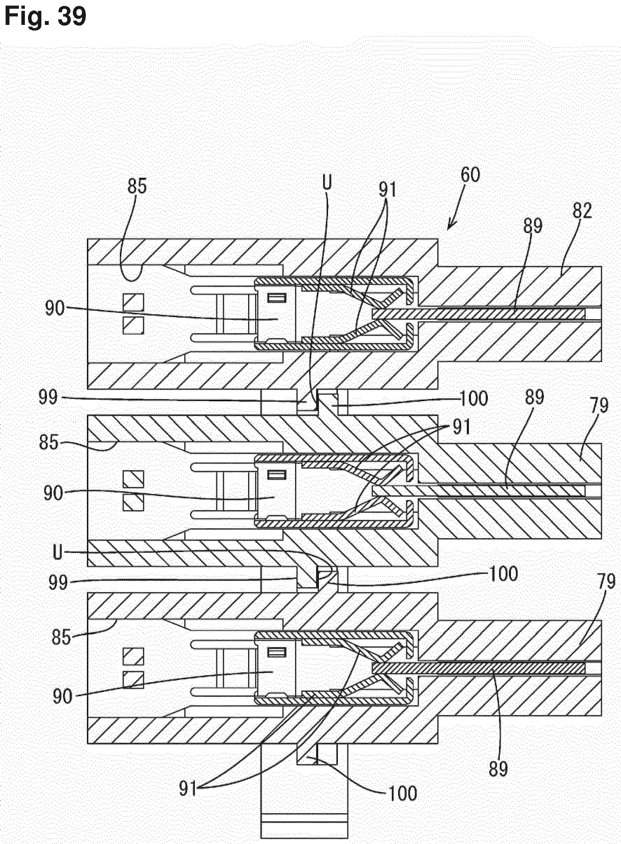

As shown in FIG. 39, in the state in which the rib-shaped engaging section 99 and the rib-shaped engaged sections 100 are engaged with each other, an engagement clearance U between the rib-shaped engaging sections 99 and the rib-shaped engaged sections 100 is set to a minimum size that is required for the rib-shaped engaging sections 99 and the rib-shaped engaged sections 100 to engage with each other.

Specifically, the engagement clearance U is set to a minimum size with which the rib-shaped engaging sections 99 and the rib-shaped engaged sections 100 can engage with each other in the fitting direction A, in a case where a plurality of first sub housings 79 stacked in the stacking direction B are, for example, manufactured or assembled within a range of a tolerance such as a manufacturing tolerance or an assembling tolerance.

Note that, although not shown in detail, in the state in which the columnar engaging sections 101 and the hole-like engaged sections 102 are engaged with each other, also an engagement clearance U between the columnar engaging sections 101 and the hole-like engaged sections 102 is set similar to the engagement clearance U between the rib-shaped engaging sections 99 and the rib-shaped engaged sections 100.

### Second Sub Housing 81

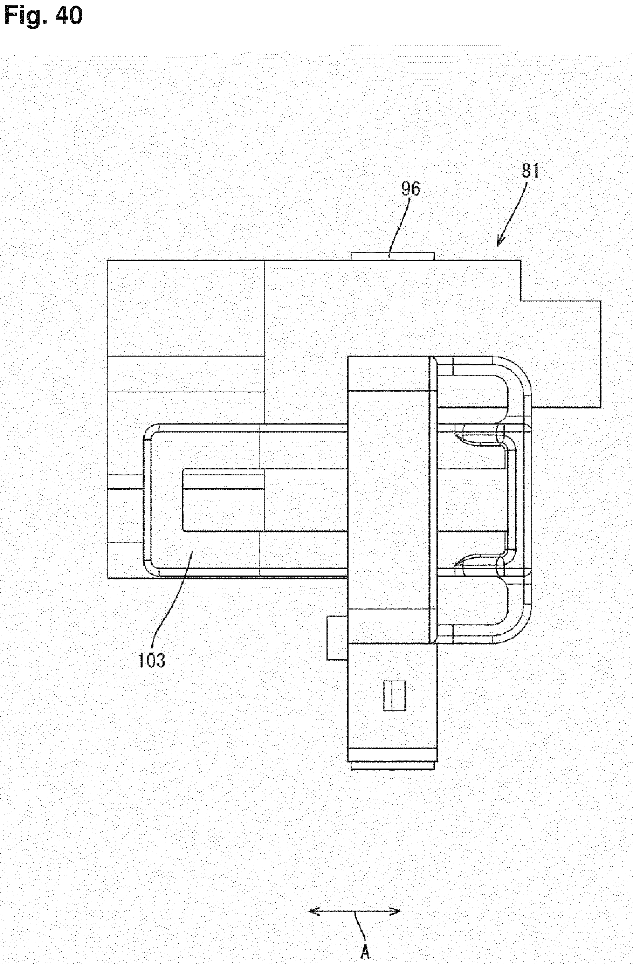

As shown in FIG. 40, the second sub housing 81 has, on the lower wall thereof, a lower-side locking section 103 that is to elastically engage with the lower-side locked section of the counterpart connector 70.

### Stacking Engaged Section 96

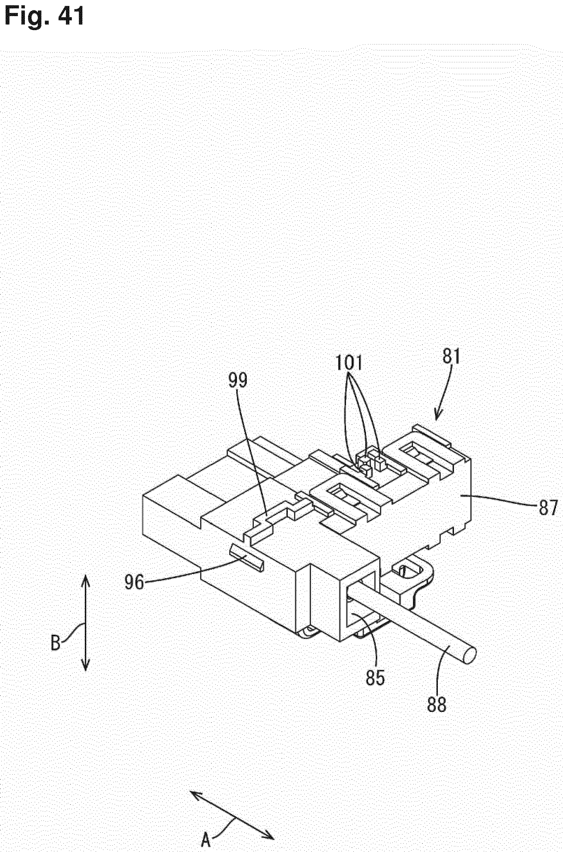

As shown in FIGS. 40 and 41, the second sub housing 81 has, on each of a pair of side walls thereof that extend in the fitting direction A, a stacking engaged section 96 that protrudes outward and is engaged with the stacking engaging section 95 of the first sub housing 79 that is overlapped with the upper side in the stacking direction B.

### Movement Restricting Engaging Section

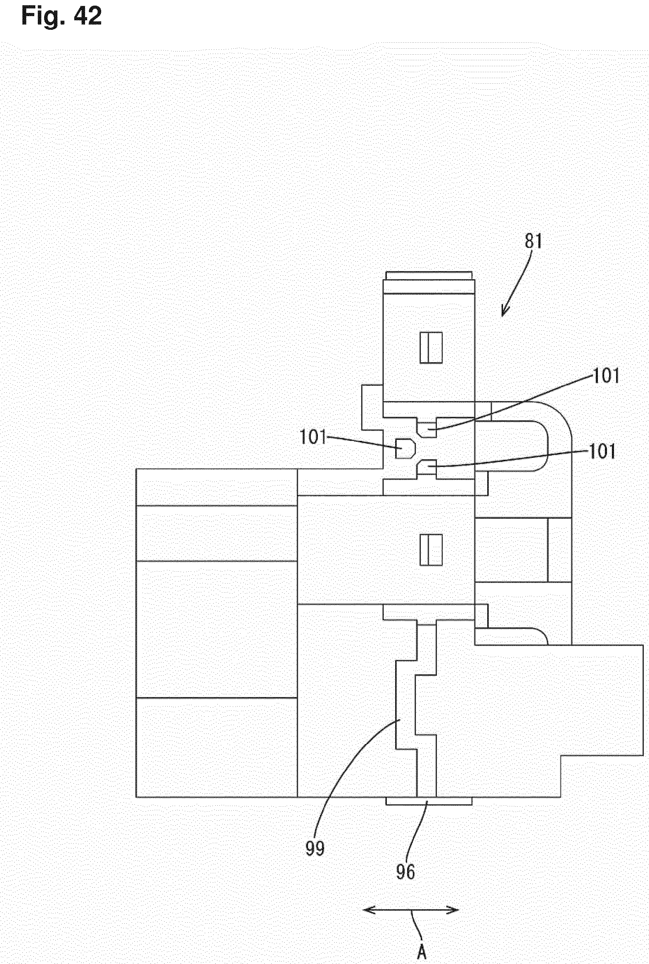

As shown in FIGS. 41 and 42, the second sub housing 81 has, on the upper wall thereof, a rib-shaped engaging section 99 (an example of the movement restricting engaging section) that protrudes in the stacking direction B (upper side of FIG. 41) and extends in a direction that crosses the fitting direction A. In the present embodiment, the rib-shaped engaging section 99 extends in the direction orthogonal to the fitting direction A. The rib-shaped engaging section 99 according to the present embodiment bulges to the front in the fitting direction A in the shape of a protrusion in the vicinity of the central section thereof in the direction orthogonal to the fitting direction A, and is bent when viewed from above. The rib-shaped engaging section 99 of the second sub housing 81 is configured to engage, in the fitting direction A, with the rib-shaped engaged sections 100 of the first sub housing 79 that is overlapped with the upper side, in the stacking direction B, of the second sub housing 81.

Furthermore, the second sub housing 81 has, on the upper wall thereof, three columnar engaging sections 101 (an example of the movement restricting engaging section) that are columnar and protrude in the stacking direction B (upward of FIG. 41). The respective columnar engaging sections 101 of the second sub housing 81 are configured to be received in the hole-like engaged sections 102 of the first sub housing 79 that is overlapped with the upper side, in the stacking direction B, of the second sub housing 81.

Structures other than those described above are substantially the same as those of the first sub housing 79, and thus like reference numerals are given to like components and redundant descriptions are omitted.

### Third Sub Housing 82

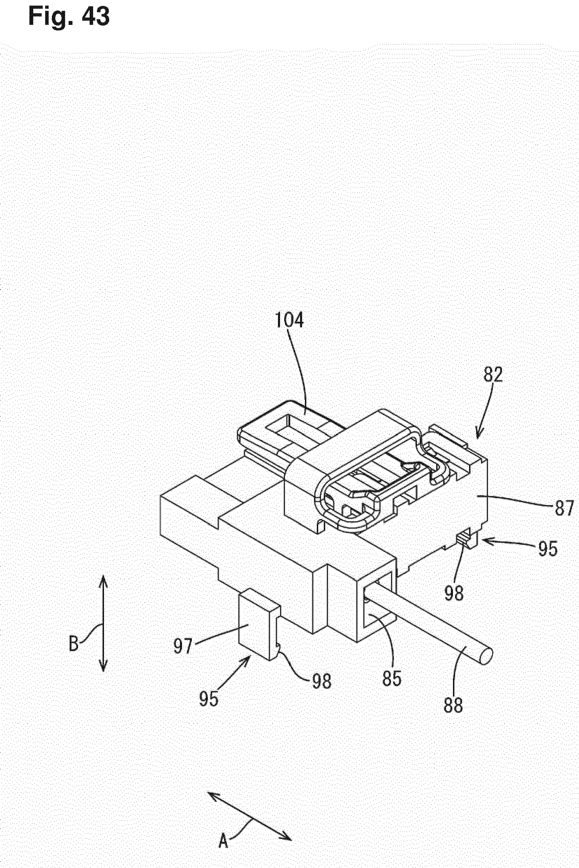

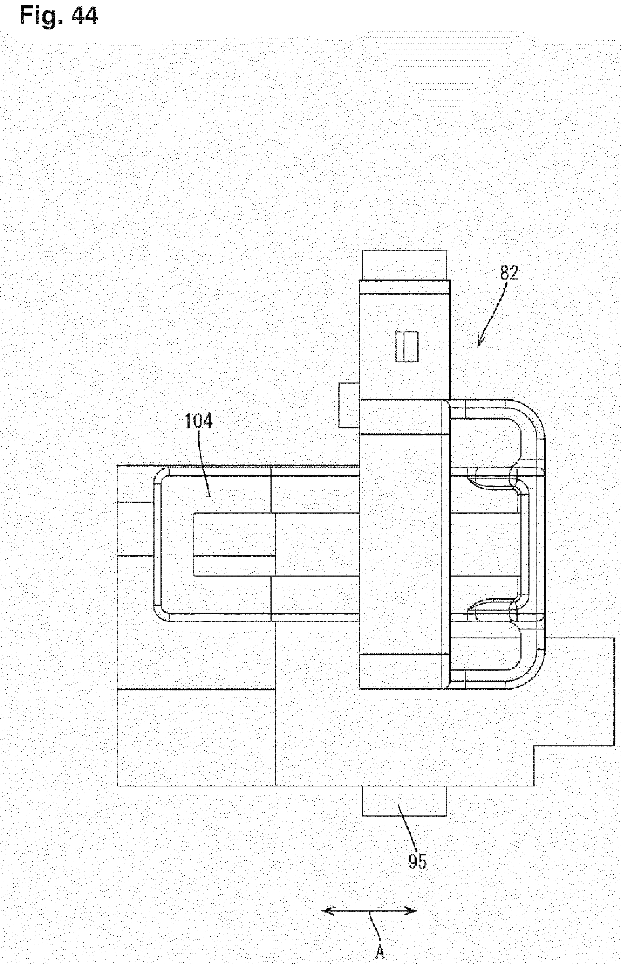

As shown in FIGS. 43 and 44, the third sub housing 82 has, on the upper wall thereof, an upper-side locking section 104 that is to elastically engage with the upper-side locked section 72 of the counterpart connector 70.

### Stacking Engaging Section 95

The third sub housing 82 has, on each of a pair of side walls thereof that extend in the fitting direction A, a stacking engaging section 95 that protrudes in the stacking direction B (lower side of FIG. 43). The stacking engaging section 95 has an elastic piece 97 that is plate-shaped extending in the stacking direction B, and a latching claw 98 that protrudes inwardly from the end of the elastic piece 97.

When the third sub housing 82 is brought to approach the first sub housing 79 from above in the stacking direction B, the latching claws 98 of the stacking engaging sections 95 of the third sub housing 82 abut on the stacking engaged sections 96 of the first sub housing 79. Accordingly, the elastic pieces 97 deform elastically outward. When the third sub housing 82 is further brought to approach the first sub housing 79, the elastic pieces 97 deform elastically, and thereby the latching claws 98 slide onto the stacking engaged sections 96. When the third sub housing 82 is further brought to approach the first sub housing 79, the latching claws 98 slide over the stacking engaged sections 96 and the elastic pieces 97 deform to recover, and thereby the latching claws 98 of the stacking engaging sections 95 and the stacking engaged sections 96 engage with each other. Accordingly, the third sub housing 82 and the first sub housing 79 that are stacked in the stacking direction B are held in the stacked state.

### Movement Restricting Engaged Section

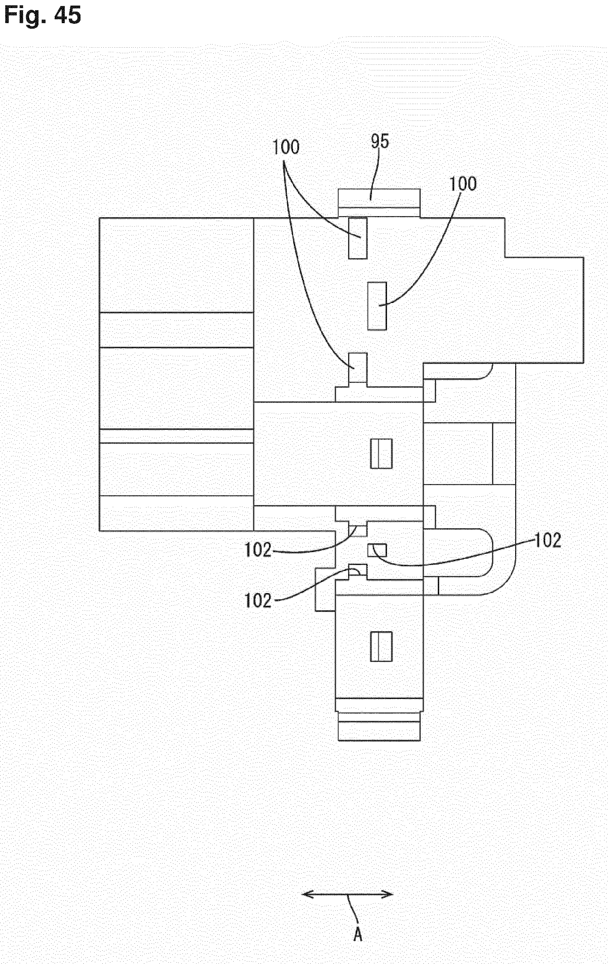

As shown in FIG. 45, the third sub housing 82 has, at the positions on the lower wall thereof that correspond to the rib-shaped engaging section 99 of the first sub housing 79 that is overlapped with the lower side, in the stacking direction B, of the third sub housing 82, rib-shaped engaged sections 100 (an example of the movement restricting engaged section) that are engaged with the rib-shaped engaging section 99. In the present embodiment, the rib-shaped engaged sections 100 are rib-shaped extending in a direction orthogonal to the fitting direction A, and are located at the positions that correspond to the sections of the rib-shaped engaging section 99 that extend in the direction orthogonal to the fitting direction A.

Furthermore, the third sub housing 82 has, at the positions on the lower wall thereof that correspond to the columnar engaging sections 101 of the first sub housing 79 that is overlapped with the lower side, in the stacking direction B, of the third sub housing 82, hole-like engaged sections 102 (an example of the movement restricting engaged section) in which the columnar engaging sections 101 are respectively received. In the present embodiment, the hole-like engaged sections 102 are caved in the fitting direction A at the positions that correspond to the columnar engaging sections 101.

In the state in which the rib-shaped engaging section 99 and the rib-shaped engaged sections 100 are engaged with each other, an engagement clearance U between the rib-shaped engaging section 99 and the rib-shaped engaged sections 100 is set to a minimum size that is required for the rib-shaped engaging section 99 and the rib-shaped engaged sections 100 to engage with each other.

Specifically, the engagement clearance U is set to a minimum size with which the rib-shaped engaging section 99 and the rib-shaped engaged sections 100 can engage with each other in the fitting direction A, in a case where a plurality of first sub housings 79 stacked in the stacking direction B are, for example, manufactured or assembled within a range of a tolerance such as a manufacturing tolerance or an assembling tolerance.

Note that, although not shown in detail, in the state in which the columnar engaging sections 101 and the hole-like engaged sections 102 are engaged with each other, also an engagement clearance U between the columnar engaging sections 101 and the hole-like engaged sections 102 is set similarly to the engagement clearance U between the rib-shaped engaging section 99 and the rib-shaped engaged sections 100.

Structures other than those described above are substantially the same as those of the first sub housing 79, and thus like reference numerals are given to like components and redundant descriptions are omitted.

### Effects and Advantages of Embodiment

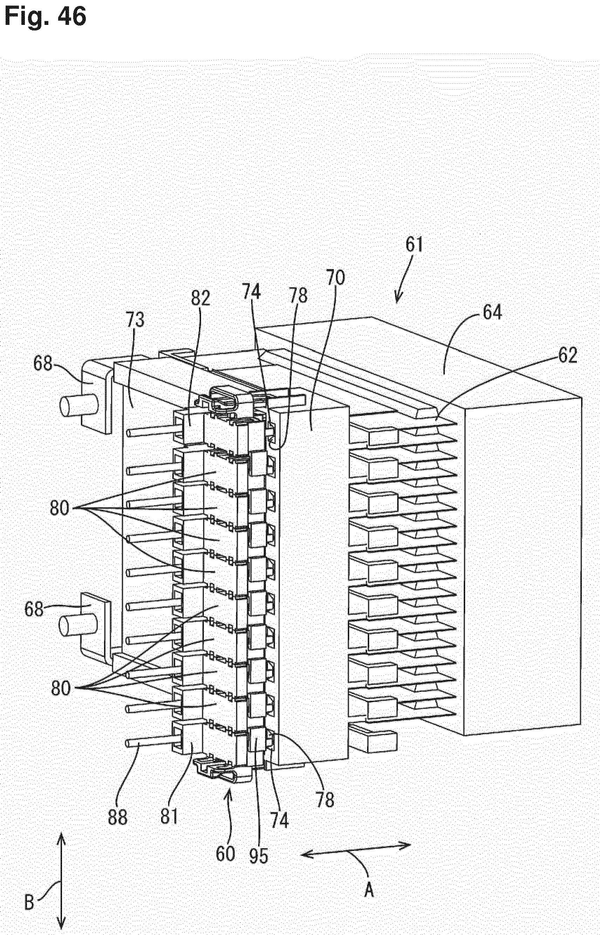

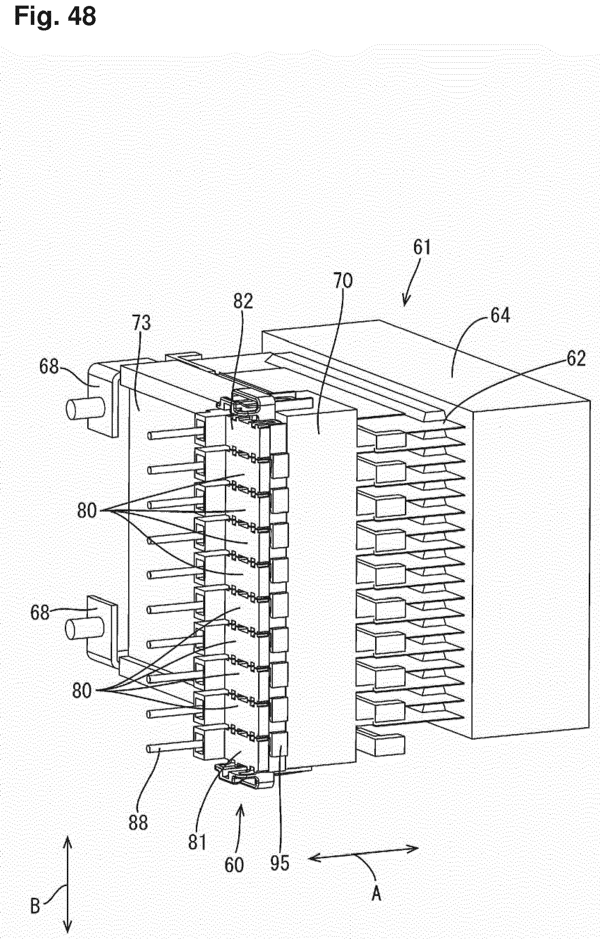

The following will describe effects and advantages of the present embodiment. First, a configuration in which a stack tolerance is absorbed will be described in detail with reference to FIGS. 46 and 48.

As shown in FIG. 46, in an initial stage of fitting between the stacked connector 60 and the counterpart connector 70, the tapered surfaces 78 of the counterpart connector 70 abut on the first to third sub housings 79, 81, and 82. Accordingly, by being guided by the tapered surfaces 78 of the counterpart connector 70, the first sub housings 79, the second sub housing 81, and the third sub housing 82 independently move in the stacking direction B within a range of the stack clearance T. Therefore, a stack tolerance, in the stacking direction B, of the plurality of electrical storage elements 62 is absorbed.

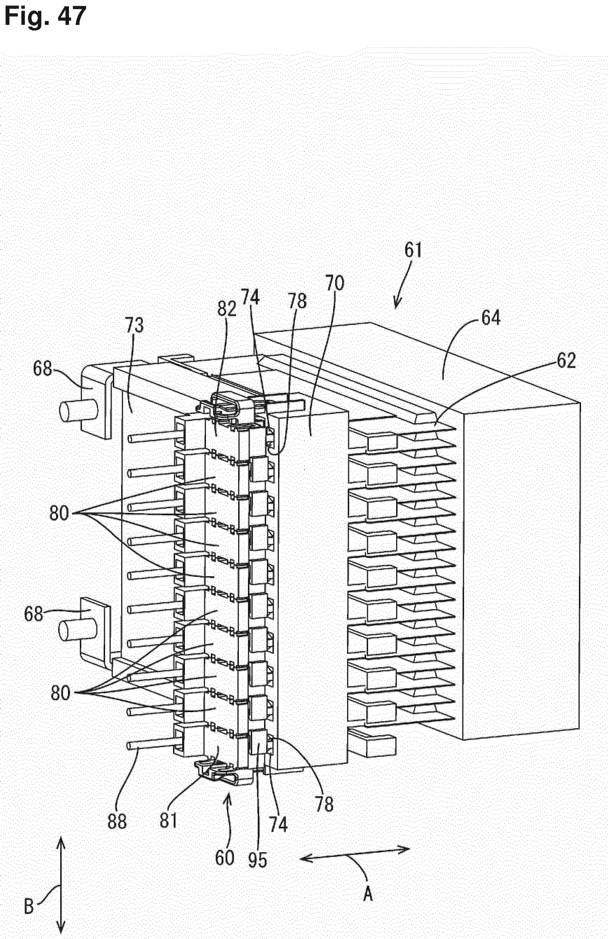

As shown in FIG. 47, in a state in which the fitting between the stacked connector 60 and the counterpart connector 70 has advanced, the counterpart connector 70 enters the cavities 85 of the first to third sub housings 79, 81, and 82.

As shown in FIG. 48, in a state in which the fitting between the stacked connector 60 and the counterpart connector 70 is complete, the upper-side locking section 104 of the stacked connector 60 and the upper-side locked section 72 of the counterpart connector 70 are engaged with each other, and the lower-side locking section 103 of the stacked connector 60 and the lower-side locked section of the counterpart connector 70 are engaged with each other, and thereby the stacked connector 60 is engaged with the counterpart connector 70 in a state of being retained. Accordingly, the stacked connector 60 and the counterpart connector 70 are electrically connected to each other.

In the present embodiment, the rib-shaped engaging section 99, which protrudes in the stacking direction B and extends in a direction that crosses the fitting direction A, serves as the movement restricting engaging section. Furthermore, the movement restricting engaged section is formed at the positions that correspond to the movement restricting engaging section, and the rib-shaped engaged sections 100, which are rib-shaped, protruding in the stacking direction B and extending in a direction that crosses the fitting direction A and abuts on the movement restricting engaging section in the fitting direction A, serve as the movement restricting engaged section.

By making both the movement restricting engaging section and the movement restricting engaged section rib-shaped, it is possible to restrict the movement restricting engaging section and the movement restricting engaged section from deforming when the movement restricting engaging section and the movement restricting engaged section abut on each other. Accordingly, it is possible to reliably restrict the first sub housings 79 from moving in the fitting direction A.

Furthermore, according to the present embodiment, the movement restricting engaging section may be the columnar engaging sections 101, which are columnar and protrude in the stacking direction B. Furthermore, the movement restricting engaged section may be the hole-like engaged sections 102, which are holes formed at the positions that correspond to the movement restricting engaging section and in which the movement restricting engaging section is received.

By making the movement restricting engaging section columnar, it is possible to restrict the movement restricting engaging section from deforming. Accordingly, it is possible to reliably restrict the first sub housings 79 from moving in the fitting direction A.

### Embodiment 3

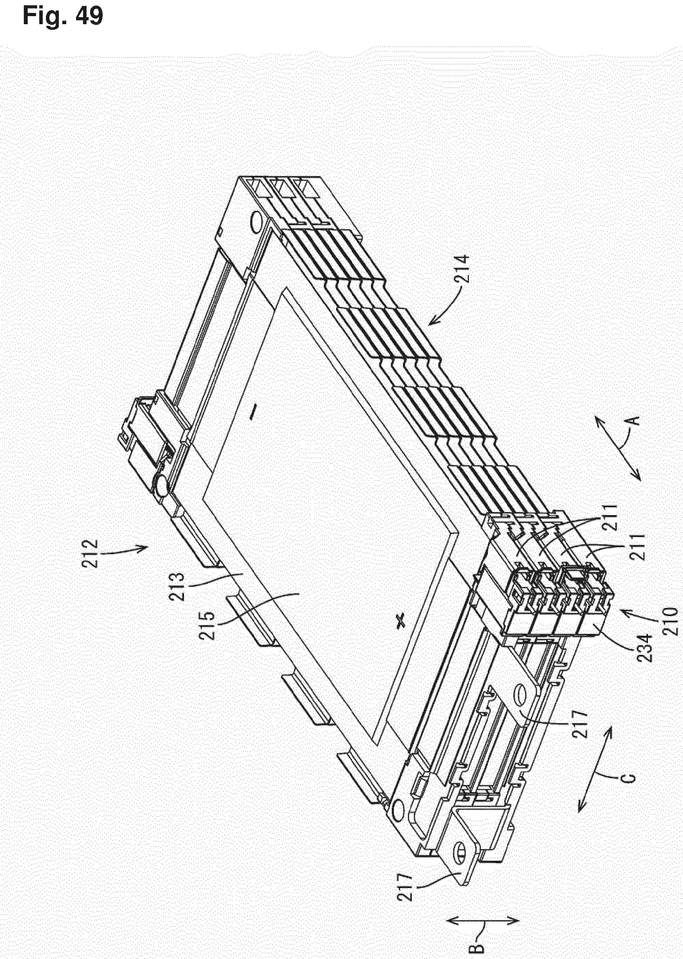

Hereinafter, a stacked connector 210 according to Embodiment 3 of the present invention will be described with reference to FIGS. 49 to FIG. 67. The stacked connector 210 according to the present embodiment is fitted to counterpart connectors 211 in the fitting direction A. The counterpart connectors 211 are arranged on an electrical storage module 212. Note that, in the drawings, a reference numeral may be added only to one of a plurality of like members, and reference numerals may be omitted for the other like members.

### Electrical Storage Module 212

As shown in FIG. 49, the electrical storage module 212 includes an electrical storage element group 214 in which a plurality of (six, in the present embodiment) electrical storage elements 213 are stacked in a stacking direction B that crosses a fitting direction A. In the present embodiment, the fitting direction A and the stacking direction B are substantially orthogonal to each other. Note that "substantially orthogonal" includes cases where the fitting direction A and the stacking direction B are orthogonal to each other, as well as cases where the fitting direction A and the stacking direction B are not orthogonal to each other but are recognized as being substantially orthogonal to each other.

In the present embodiment, the electrical storage element 213 may be suitable electrical storage elements 213, such as secondary batteries, capacitors, or condensers, as needed. The electrical storage elements 213 according to the present embodiment are secondary batteries.

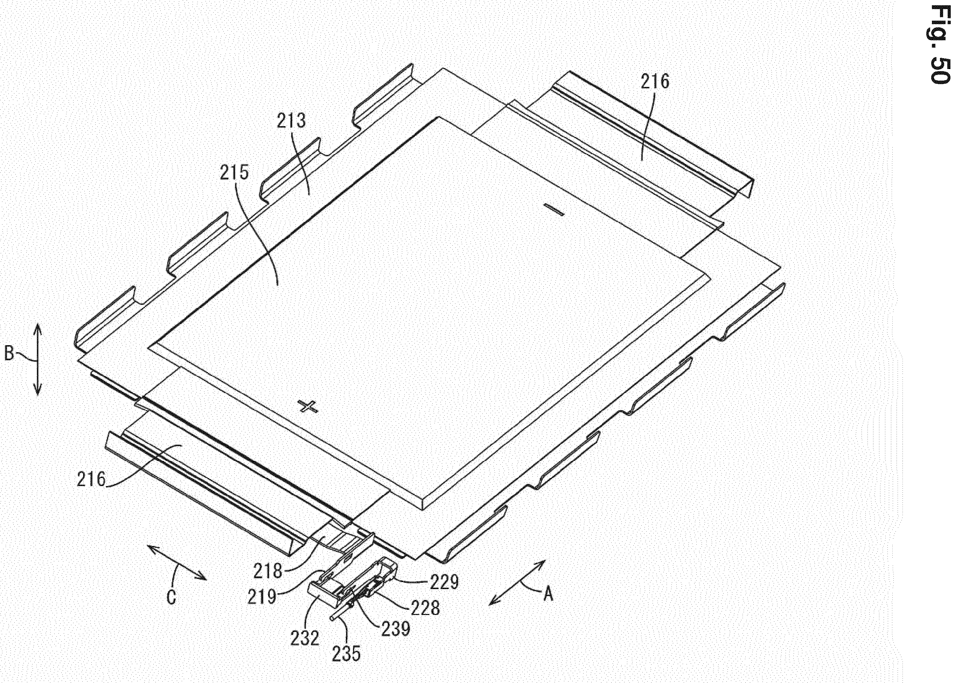

As shown in FIG. 50, each electrical storage element 213 is substantially rectangular when viewed from above. The electrical storage element 213 has a main body 215 that is formed by melting and adhering side edges of a pair of substantially rectangular laminated films, an electrical storage component that is not shown and is accommodated within the main body 215, and lead terminals 216 that are connected to the electrical storage component within the main body 215, and are led out to the outside from the short sides of the main body 215 that is substantially rectangular when viewed from above. The polarity of the lead terminal 216 that is led out from one short side of the main body 215 is different from the polarity of the lead terminal 216 that is led out from the other short side.

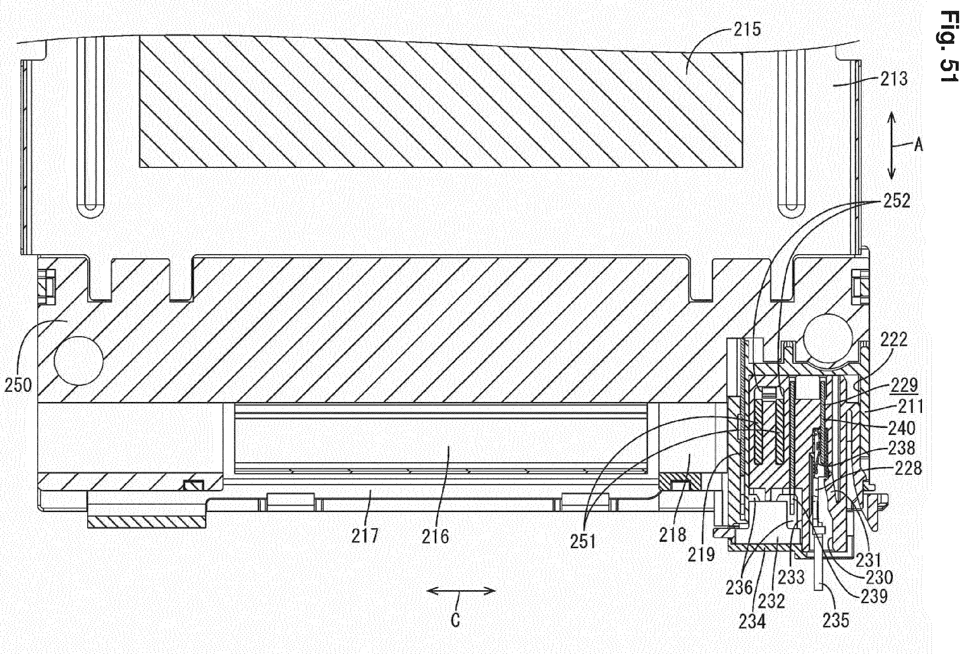

As shown in FIG. 51, the electrical storage elements 213 stacked in the stacking direction B are connected in series or in parallel to each other by the lead terminals 216 of the electrical storage elements 213 being connected to each other via metal busbars 217. In the present embodiment, the electrical storage elements 213 stacked in the stacking direction B are connected in series to each other by the lead terminals 216 having different polarities being connected to each other via the busbars 217. The busbars 217 and the lead terminals 216 can be connected to each other by a well-known method such as welding, soldering, or brazing.

Voltage detecting busbars 218 that are made of metal and are configured to detect a voltage of the electrical storage elements 213 are connected to the respective busbars 217 by a well-known method such as welding, soldering, or brazing. Each voltage detecting busbar 218 has an end that is further bent at a right angle. The end of the voltage detecting busbar 218 that is bent at a right angle has a pair of busbar-side arm sections 219 that are inserted into the counterpart connectors 211. The busbar-side arm sections 219 protrude in the fitting direction A. The busbar-side arm sections 219 are configured to hold lead terminals 236 of a fuse 232, which will be described later.

### Counterpart Connector 211

As shown in FIG. 51, the busbar 217 and the voltage detecting busbar 218 are held by a busbar holding member 250 that is made of a synthetic resin. The busbar holding member 250 is flat-plate shaped. The busbar holding member 250 has a shape that is elongated in a cross direction C that is different from the fitting direction A and crosses the stacking direction B. In the present embodiment, the fitting direction A, the stacking direction B, and the cross direction C are perpendicular to each other.

Each busbar holding member 250 has, at a position close to one end thereof in the cross direction C, the counterpart connector 211. Each counterpart connector 211 has a cavity 222 in which the busbar-side arm sections 219 are received, and that extends in the fitting direction A. In a state in which a plurality of (four, in the present embodiment) busbar holding members 250 are stacked, the cavities 222 formed in the respective busbar holding members 250 are lined up in the stacking direction B. The busbar-side arm sections 219 penetrate the back wall of the cavity 222 and are arranged within the cavity 222.

### Stacked Connector 210

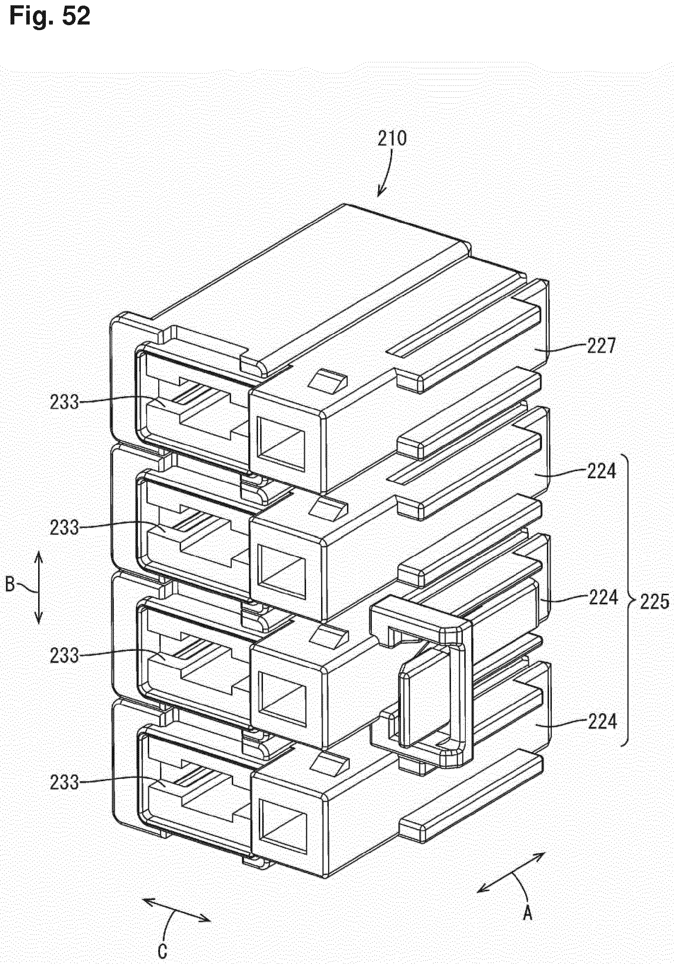

As shown in FIG. 52, the stacked connector 210 includes a plurality of (three, in the present embodiment) first sub housings 224 that are stacked in the stacking direction B that crosses the fitting direction A in which the stacked connector 210 is fitted to the counterpart connectors 211. The plurality of first sub housings 224 constitute a first sub-housing group 225 by being lined up in the stacking direction B. The stacking direction B according to the present embodiment is set to a direction that is orthogonal to the fitting direction A.

At one end (upper end in FIG. 52) of the first sub housing group 225, a second sub housing 227 is overlapped with the upper side thereof in the stacking direction B.

### First Sub Housing 224

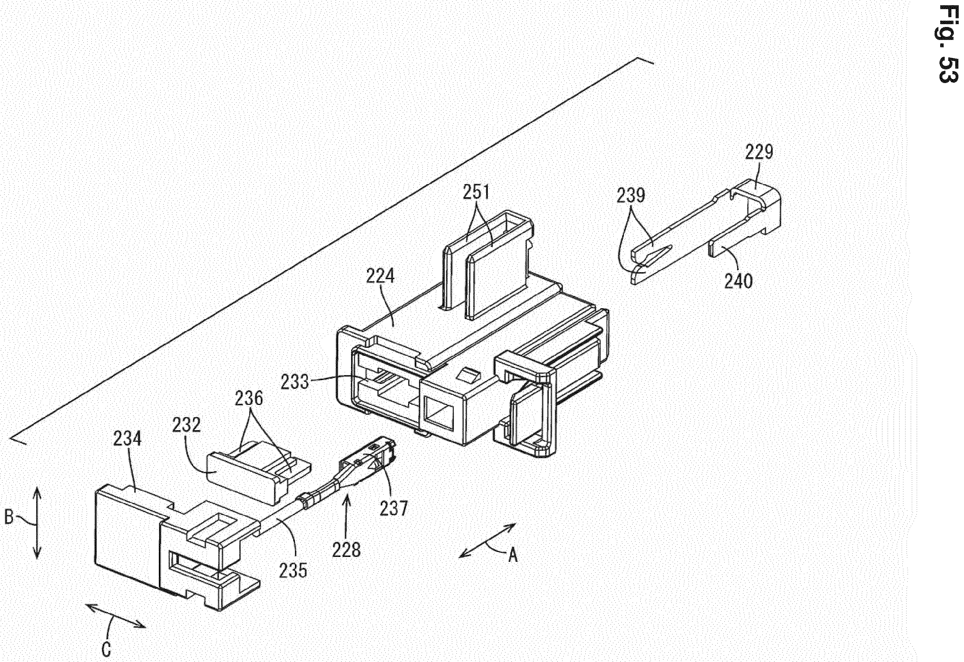

As shown in FIGS. 53 to 59, each first sub housing 224 is made of a synthetic resin, and has cavities 230 in which a terminal 228 and a relay terminal 229 are respectively received, and that extend in the fitting direction A.

The first sub housing 224 has, at the position opposite to the end thereof that is fitted to the counterpart connector 211, a fuse mounting section 233 (an example of the overcurrent protection element) on which a fuse 232 is mounted. A fuse cover 234 for covering the fuse 232 mounted on the fuse mounting section 233 is attached to the first sub housing 224. If an overcurrent flows through the fuse 232, the fuse 232 will melt and break to interrupt the overcurrent.

The terminal 228 is configured to be held in the cavity 230 while being retained by a lance 231 formed on the inner wall of the cavity 230 being caught by the terminal 228. The terminal 228 is formed by press processing a metal plate material into a predetermined shape. The terminal 228 is connected to an end of an electric wire 235. The terminal 228 has, at the position opposite to the part thereof that is connected to the electric wire 235, a tubular connection section 237 that is connected to a terminal-side tab 240 of the relay terminal 229. An elastic contact piece 238 that is elastically in contact with the terminal-side tab 240 are arranged within the connection section 237. By the terminal-side tab 240 of the relay terminal 229 and the elastic contact piece 238 being elastically in contact with each other, the relay terminal 229 and the terminal 228 are electrically connected to each other.

The relay terminal 229 is received in the cavity 230 of the first sub housing 224. The relay terminal 229 is formed by press processing a metal plate material into a predetermined shape. The relay terminal 229 has the terminal-side tab 240 that is connected to the terminal 228, and a pair of fuse-side arm sections 239 that are connected to the lead terminals 236 of the fuse 232.

### Stacking Engaging Section 243 and Stacking Engaged Section 244

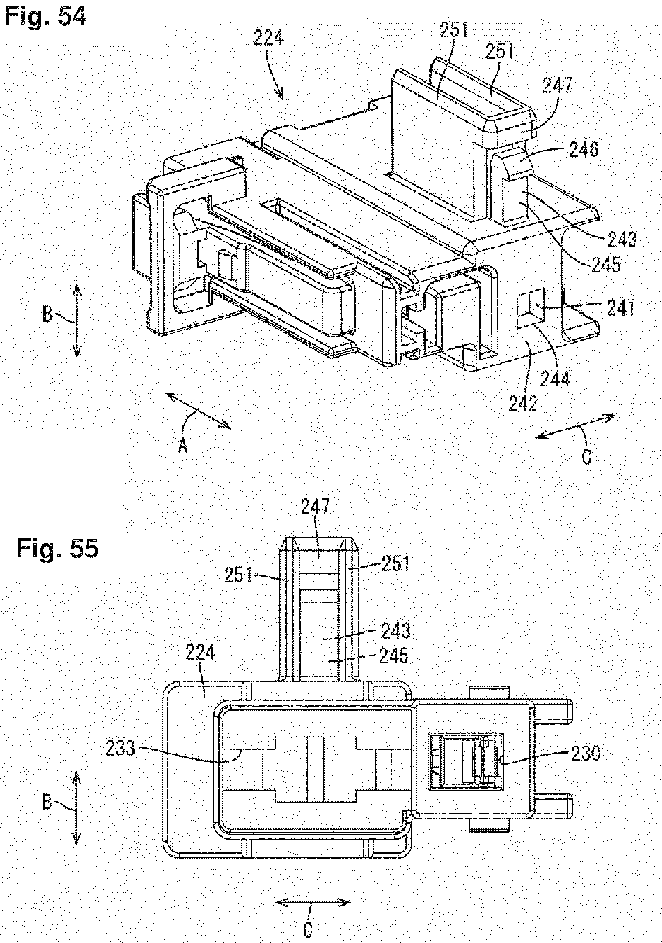

As shown in FIGS. 54 to 58, the first sub housing 224 has, at a position on the upper wall thereof that is close to the front end thereof in the fitting direction A, a stacking engaging section 243 protruding in the stacking direction B. The stacking engaging section 243 includes an elastic piece 245 that extend in the stacking direction B and is elastically deformable, and a latching claw 246 that protrudes from the front end of the elastic piece 245 in the fitting direction A.

The first sub housing 224 has, on the side wall thereof located at the front end in the fitting direction A, an engagement hole 241. The hole rim section of the engagement hole 241 serves as a stacking engaged section 244 with which the latching claw 246 of the stacking engaging section 243 engages.

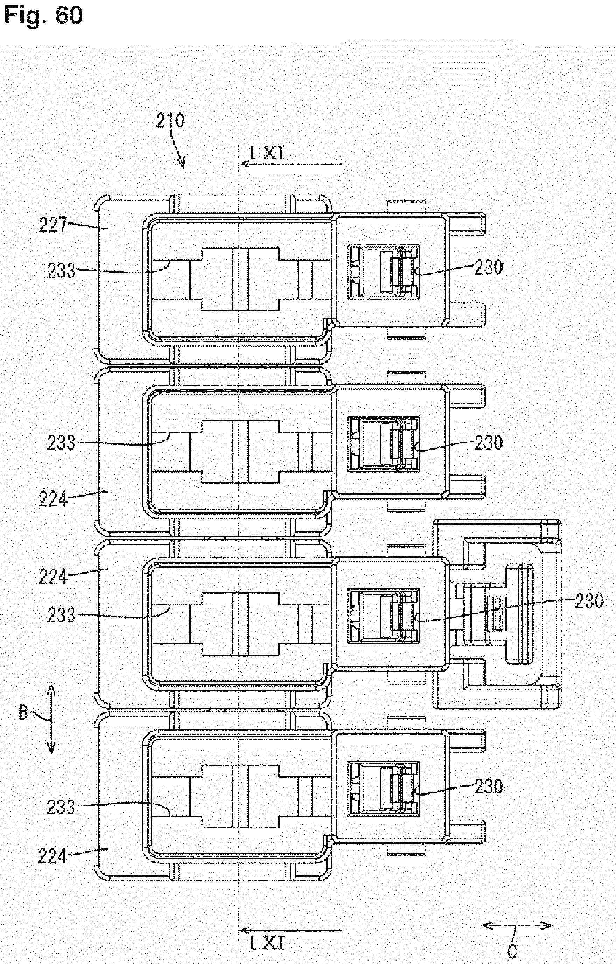

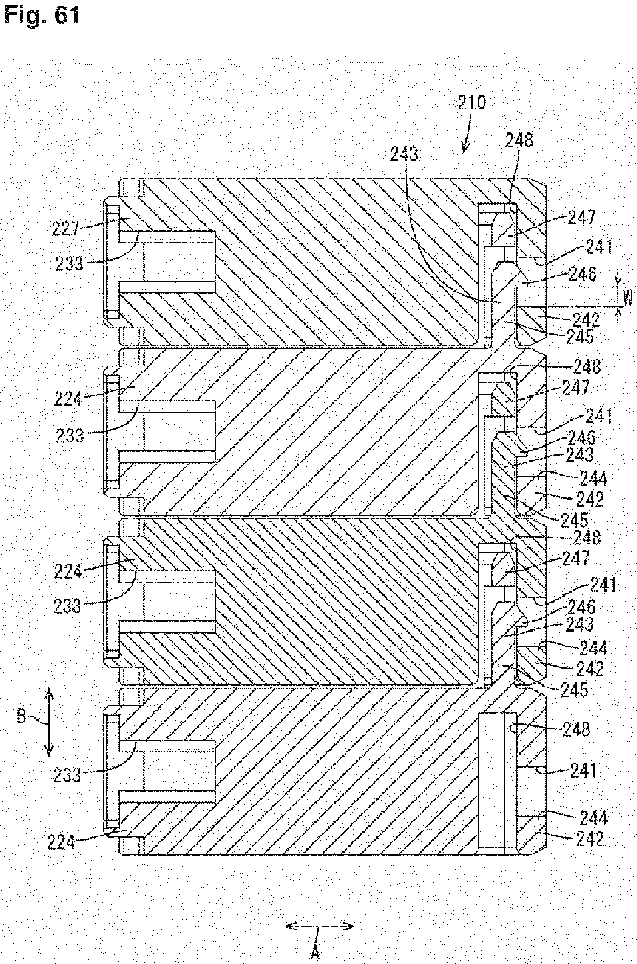

As shown in FIGS. 60 and 61, the stacking engaging sections 243 and the stacking engaged sections 244 are engaged with each other, a stack clearance W between the latching claws 246 of the stacking engaging sections 243 and the stacking engaged sections 244 is formed in the stacking direction B. The stack clearance W is set to be larger than a minimum clearance that is required for the stacking engaging sections 243 and the stacking engaged sections 244 to engage with each other. The stack clearance W is set to be equal to or slightly larger than a tolerance, in the stacking direction B, of the stacked electrical storage elements 213.

As shown in FIGS. 60 and 61, in a state in which the stacking engaging sections 243 and the stacking engaged sections 244 are engaged with each other, a region of the front end, in the fitting direction A, of each first sub housing 224 that is lower in the stacking direction B than the engagement hole 241 serves as a protection section 242 that covers at least a part of the stacking engaging section 243 (a part of the elastic piece 245 in the present embodiment). The latching claw 246 does not protrude frontward in the fitting direction A from the hole rim section of the engagement hole 241.

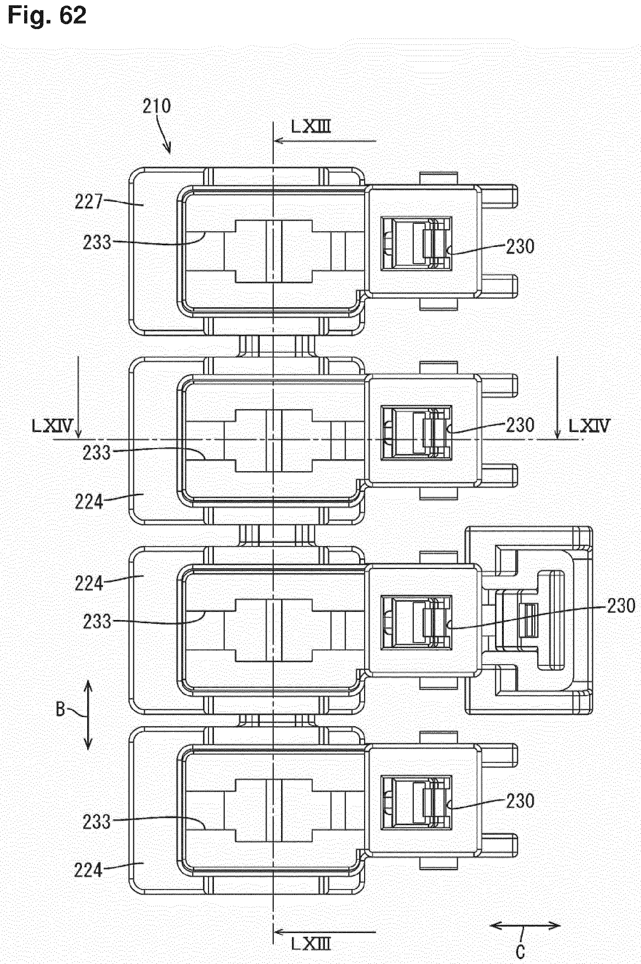

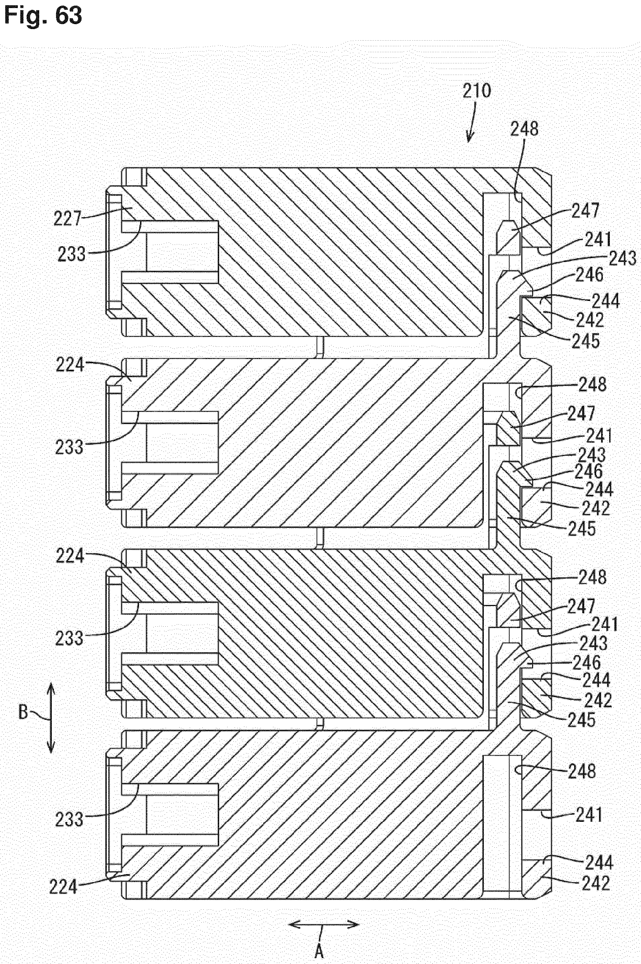

As shown in FIGS. 62 and 63, by each first sub housing 224 moving in the stacking direction B within a range of the stack clearance W, a tolerance in the stacking direction B of the stacked electrical storage elements 213 can be absorbed.

### Movement Restricting Engaging Section 247 and Twist Restricting Engaging Section 251

As shown in FIGS. 54 to 58, the upper wall of the first sub housing 224 has rib-shaped twist restricting engaging sections 251 that protrude in the stacking direction B, and extend in the fitting direction A. In the present embodiment, two twist restricting engaging sections 251 are formed side by side at a distance in the cross direction C.

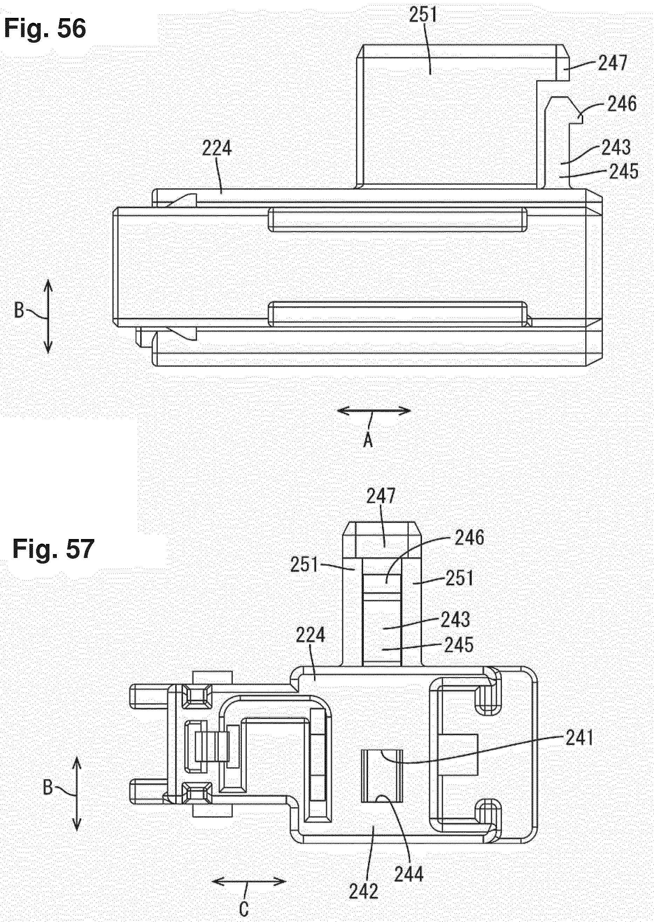

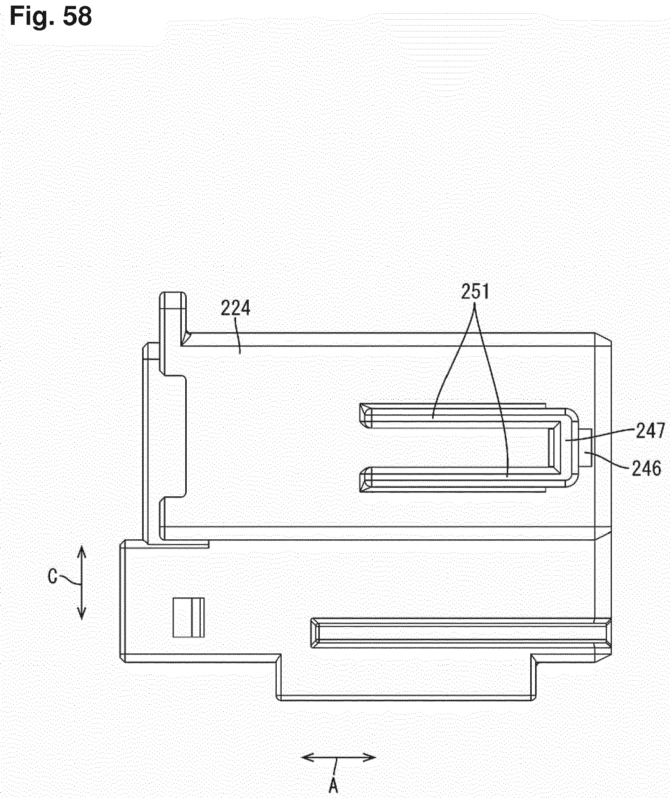

As shown in FIG. 58, the front ends, in the fitting direction A, of the two twist restricting engaging sections 251 are connected to each other by a movement restricting engaging section 247. As shown in FIGS. 56 and 57, the movement restricting engaging section 247 is formed at a position above the stacking engaging section 243. As shown in FIG. 58, the latching claw 246 protrudes frontward in the fitting direction A from the movement restricting engaging section 247.

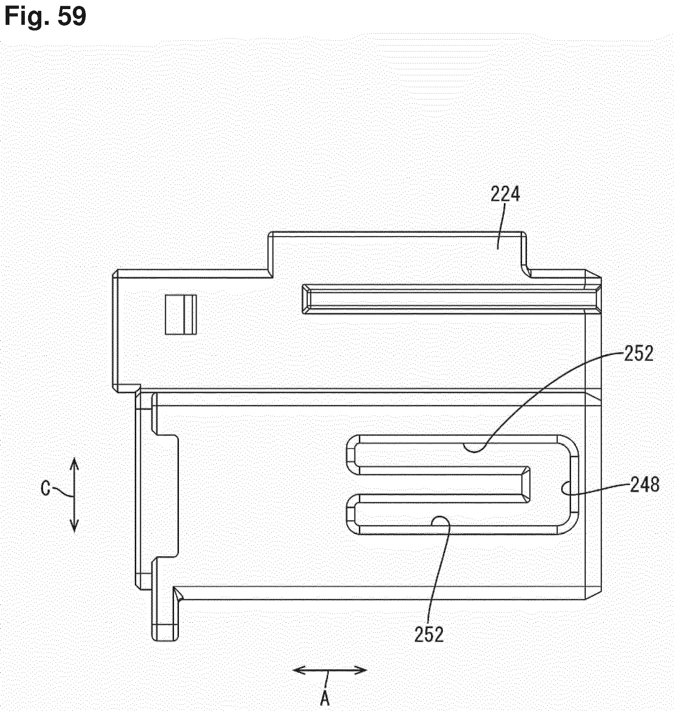

As shown in FIG. 59, the first sub housing 224 has, at the positions on the lower wall thereof that correspond to the twist restricting engaging sections 251, twist restricting engaged sections 252 that engage with the twist restricting engaging sections 251, and has, at the position that corresponds to the movement restricting engaging section 247, a movement restricting engaging section 247 that engages with the movement restricting engaging section 247. In the present embodiment, the twist restricting engaged sections 252 are groove-shaped so that the corresponding twist restricting engaging section 251 is received, and the movement restricting engaged section 248 is groove-shaped so that the movement restricting engaging section 247 is received. Furthermore, in the present embodiment, the front ends, in the fitting direction, of the two twist restricting engaged sections 252 are connected to each other by the movement restricting engaged section 248.

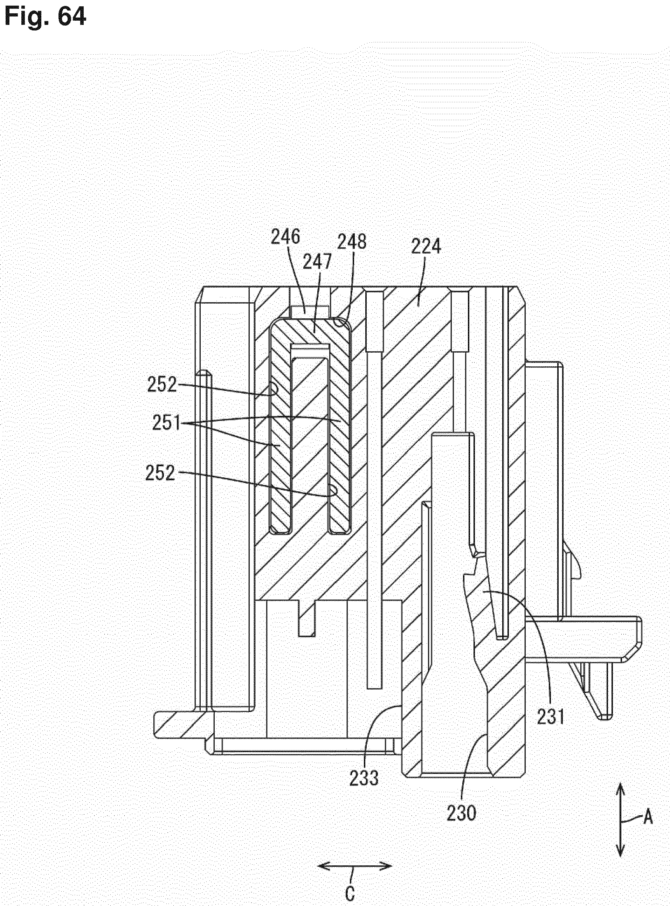

As shown in FIG. 64, the inner walls of the groove-shaped twist restricting engaged sections 252 are configured to abut on the twist restricting engaging sections 251 in the cross direction C.

### Second Sub Housing 227

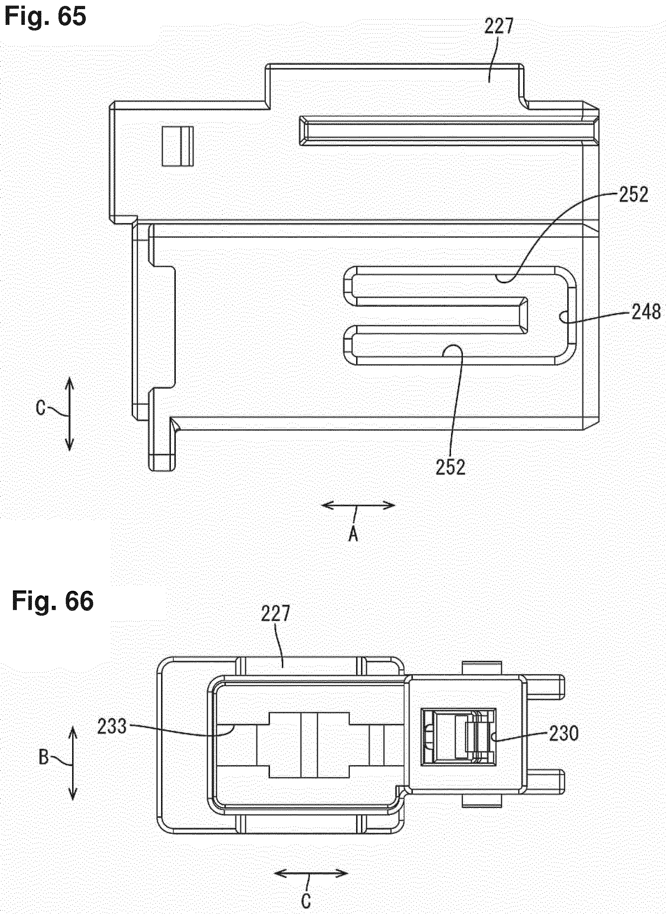

As shown in FIG. 65, the second sub housing 227 has, at the positions on the lower wall thereof that corresponds to the twist restricting engaging sections 251, twist restricting engaged sections 252 that engages with the twist restricting engaging sections 251, and has, at the position that corresponds to the movement restricting engaging section 247, a movement restricting engaging section 247 that engages with the movement restricting engaging section 247. In the present embodiment, the twist restricting engaged sections 252 are groove-shaped so that the twist restricting engaging sections 251 are received, and the movement restricting engaged section 248 is groove-shaped so that the movement restricting engaging section 247 is received. Furthermore, in the present embodiment, the front ends, in the fitting direction, of the two twist restricting engaged sections 252 are connected to each other by the movement restricting engaged section 248.

Note that, as shown in FIG. 66, in contrast to the first sub housing 224, the upper wall of the second sub housing 227 does not have the twist restricting engaging sections 251, the movement restricting engaging section 247, and the stacking engaging section 243.

Structures other than those described above are substantially the same as those of the first sub housing 224, and thus like reference numerals are given to like components and redundant descriptions are omitted.

### Assembling Process

The following will describe an example of an assembling process of the stacked connector 210 according to the present embodiment. Note that the assembling process of the stacked connector 210 is not limited to the description below. First, the relay terminal 229, and the terminal 228 connected to terminals of the electric wires 235 are received in the cavities 230 of the first sub housings 224 and the second sub housing 227. Then, the fuses 232 are mounted on the fuse mounting sections 233, and the fuse covers 234 are attached thereto.

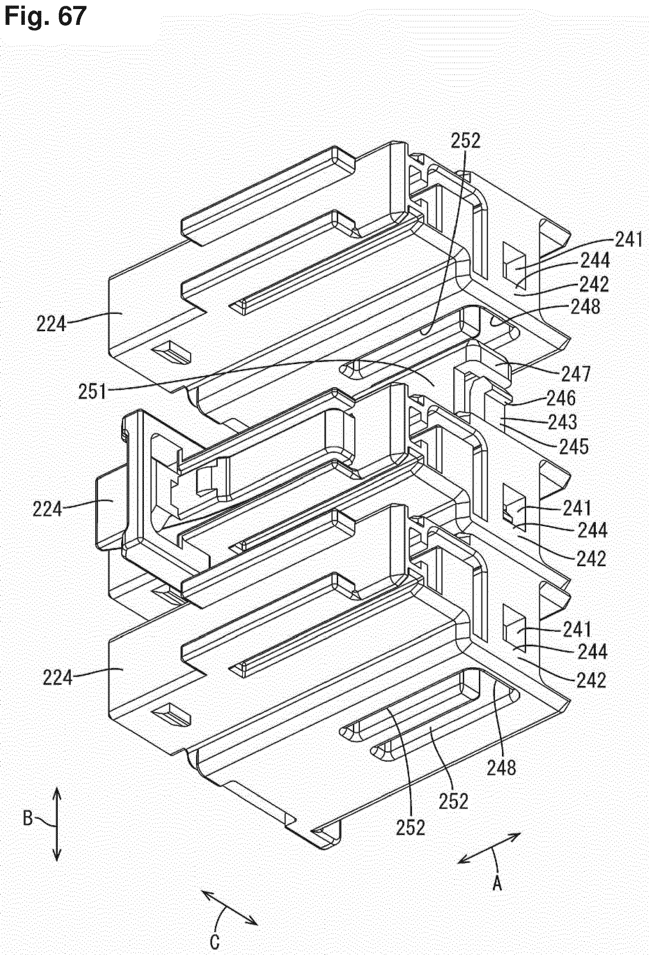

Then, as shown in FIG. 67, a predetermined number of (two, in the present embodiment) first sub housings 224 are further stacked on the first sub housing 224, the stacking engaging sections 243 and the stacking engaged sections 244 are engaged with each other, and the movement restricting engaging sections 247 and the movement restricting engaged sections 248 are engaged with each other. Furthermore, the twist engaging sections and the twist engaged sections are engaged with each other. Accordingly, the plurality of first sub housings 224 are held while being stacked in the stacking direction B.

Subsequently, the second sub housing 227 is stacked on the first sub housing 224 located in the uppermost stage, the stacking engaging sections 243 and the stacking engaged sections 244 are engaged with each other, and the movement restricting engaging sections 247 and the movement restricting engaged sections 248 are engaged with each other. Furthermore, the twist engaging sections and the twist engaged sections are engaged with each other. Accordingly, the first sub housings 224 and the second sub housing 227 are held while being stacked in the stacking direction B. The stacked connector 210 is completed in the above-described manner.

### Effects and Advantages of Embodiment

The following will describe effects and advantages of the present embodiment. According to the present embodiment, the plurality of first sub housings 224 have, in a state in which their stacking engaging sections 243 and stacking engaged sections 244 are engaged with each other, the protection sections 242 for externally covering at least a part of the stacking engaging sections 243. Accordingly, it is possible to prevent the stacking engaging sections 243 from getting in contact with a foreign substance. As a result, it is possible to prevent the stacking engaging sections 243 and the stacking engaged sections 244 from disengaging from each other due to the stacking engaging sections 243 getting in contact with a foreign substance.

Furthermore, as shown in FIG. 64, according to the present embodiment, each of the plurality of first sub housings 224 has the twist restricting engaging sections 251 that protrude in the stacking direction B, and the twist restricting engaged sections 252 that engage with the twist restricting engaging sections 251 in the cross direction C, which is different from the fitting direction A and crosses the stacking direction. Accordingly, in the stacked first sub housings 224, the movement restricting engaging section 247 and the movement restricting engaged section 248 engage with each other in the fitting direction A, and the twist restricting engaging sections 251 and the twist restricting engaged sections 252 engage with each other in the cross direction C. Accordingly, by the stacked first sub housings 224 being engaged with each other in at least two directions, the stacked first sub housings 224 are prevented from being stacked in an orientation in which they are twisted in the stacking direction B when the stacked first sub housings 224 have moved in the stacking direction B in a range of the stack clearance W

The above-described effects and advantages will be described in detail. In the stacked connector 210 according to the present embodiment, the stacking engaging sections 243 and the stacking engaged sections 244 are engaged with each other at a stack clearance W. Accordingly, it is possible to absorb a tolerance in the stacking direction B.

FIGS. 62 and 63 show the state in which the stacked connector 210 has the greatest length in the stacking direction B. In FIG. 62, two ends in the cross direction C (horizontal direction of FIG. 62) of the stacked connector 210 extend uniformly in the stacking direction B.

However, a case may be considered that the two ends in the cross direction C have non-uniform lengths in the stacking direction B. If so, there is a risk that the stacked connector 210 has an orientation in which it is twisted in the stacking direction B frontward, rearward, rightward, or leftward. For example, a distance between the first sub housings 224 in the stacking direction B at the left end of FIG. 62 is shorter than a distance between the first sub housings 224 in the stacking direction B at the right end of FIG. 62. In this case, there is a risk that the stacked connector 210 has an orientation of being twisted to the left of FIG. 62 in the stacking direction B.

Therefore, in the present embodiment, the stacked first sub housings 224 have a configuration in which the movement restricting engaging sections 247 and the movement restricting engaged sections 248 are engaged with each other in the fitting direction, and the twist restricting engaging sections 251 and the twist restricting engaged sections 252 are engaged with each other in a cross direction. By engaging the stacked first sub housings 224 in at least two directions, it is possible to prevent the stacked first sub housings 224 from being stacked in an orientation of being twisted in the stacking direction B when the stacked first sub housings 224 have moved in the stacking direction within a range of the stack clearance W.

Furthermore, according to the present embodiment, the twist restricting engaging sections 251 are rib-shaped, protruding in the stacking direction B and extending in a direction that crosses the cross direction C, and the twist restricting engaged sections 252 are formed at the positions that correspond to the twist restricting engaging sections 251, and are groove-shaped so that the twist restricting engaging sections 251 are respectively received. According to the above configuration, by making the twist restricting engaging section 251 rib-shaped, it is possible to restrict the twist restricting engaging sections 251 from deforming. Accordingly, it is possible to reliably prevent a plurality of first sub housings 224 from being stacked in an orientation in which they are twisted in the stacking direction B.

### Other Embodiments

The present invention is not limited to the embodiments described with reference to the above description and the drawings, and the technical scope of the present invention includes, for example, the following embodiments.
(1) In the present embodiments, the fuse is used as an overcurrent protection element, but the present invention is not limited to this and any overcurrent protection element, such as a PTC element or a thermistor, may be used as needed.
(2) In Embodiments 1 and 2, the second sub housing and the third sub housing are overlapped with two ends of the first sub housing group, but both or either of the second sub housing and the third sub housing may be omitted.
(3) In the present embodiment, the stacking engaging sections and the movement restricting engaging sections are different members, but the present invention is not limited to this, and an engaging section, which is a single member, may include the stacking engaging sections and the movement restricting engaging sections, and an engaged section, which is a single member, may include the stacking engaged sections and the movement restricting engaged sections.
(4) The first sub housings and the third sub housing may have one stacking engaging section, or three or more stacking engaging sections.
(5) The first sub housings and the second sub housing may have one movement restricting engaging section, or three or more movement restricting engaging sections.
(6) The plurality of electrical storage elements may be connected to each other in parallel, or a configuration is also possible in which a plurality of electrical storage element groups in which a plurality of electrical storage elements are connected to each other in parallel are connected to each other in series.

### List of Reference Numerals

- 10, 60, 210: Stacked connector
- 11, 70, 211: Counterpart connector
- 20, 72: Upper-side locked section
- 21: Lower-side locked section
- 24, 79, 224: First sub housing
- 26, 81, 227: Second sub housing
- 27, 82: Third sub housing
- 32, 75, 232: Fuse
- 43, 95, 243: Stacking engaging section
- 44, 96, 244: Stacking engaged section
- 47, 247: Movement restricting engaging section
- 48, 248: Movement restricting engaged section
- 51, 104: Upper-side locking section
- 50, 103: Lower-side locking section
- 99: Rib-shaped engaging section
- 100: Rib-shaped engaged section
- 101: Columnar engaging section
- 102: Hole-like engaged section
- 251: Twist restricting engaging section
- 252: Twist restricting engaged section
- A: Fitting direction
- B: Stacking direction
- R, T: Stack clearance
- S, U: Engagement clearance

## Claims

1. A stacked connector for fitting to a counterpart connector in a fitting direction, comprising:
a plurality of first sub housings that are stacked in a stacking direction that crosses the fitting direction,
wherein each of the plurality of first sub housings is provided with an engaging section protruding in the stacking direction, and an engaged section that engages with the engaging section, and
a stack clearance is set, in the stacking direction, between the engaging section and the engaged section in a state in which the engaging section and the engaged section are engaged with each other, and a minimum engagement clearance that is required for the engaging section and the engaged section to engage with each other is set in the fitting direction.

2. The stacked connector according to claim 1,
wherein the engaging section includes a stacking engaging section, and a movement restricting engaging section, which is a member different from the stacking engaging section, and
the engaged section has a stacking engaged section that is engaged with the stacking engaging section in the stacking direction, and a movement restricting engaged section that is a member different from the stacking engaged section and is engaged with the movement restricting engaging section in the fitting direction.

3. The stacked connector according to claim 2,
wherein the plurality of first sub housings respectively have protection sections for externally covering at least a part of the stacking engaging section in the state in which the stacking engaging section and the stacking engaged section are engaged with each other.

4. The stacked connector according to claim 2 or 3,
wherein the movement restricting engaging section is rib-shaped, protruding in the stacking direction and extending in a direction that crosses the fitting direction, and
the movement restricting engaged section is formed at a position that corresponds to the movement restricting engaging section, and is groove-shaped so that the movement restricting engaging section is received.

5. The stacked connector according to claim 2 or 3,
wherein the movement restricting engaging section is rib-shaped, protruding in the stacking direction and extending in a direction that crosses the fitting direction, and
the movement restricting engaged section is formed at a position that corresponds to the movement restricting engaging section, is rib-shaped, protruding in the stacking direction and extending in the direction that crosses the fitting direction, and abuts on the movement restricting engaging section in the fitting direction.

6. The stacked connector according to claim 2 or 3,
wherein the movement restricting engaging section is columnar and protrudes in the stacking direction, and
the movement restricting engaged section is formed at a position that corresponds to the movement restricting engaging section, and has a hole-like shape so that the movement restricting engaging section is received.

7. The stacked connector according to any one of claims 2 to 6,
wherein each of the plurality of first sub housings is provided with:
a twist restricting engaging section that protrudes in the stacking direction; and
a twist restricting engaged section that is engaged with the twist restricting engaging section in a cross direction that is different from the fitting direction and crosses with the stacking direction.

8. The stacked connector according to claim 7,
wherein the twist restricting engaging section is rib-shaped, protruding in the stacking direction and extending in a direction that crosses the cross direction, and
the twist restricting engaged section is formed at a position that corresponds to the twist restricting engaging section, and is groove-shaped so that the twist restricting engaging section is received.

9. The stacked connector according to any one of claims 1 to 8,
wherein the first sub housing has an overcurrent protection element for interrupting an overcurrent.

10. The stacked connector according to any one of claims 1 to 9,
wherein, at one end, in the stacking direction, of a first sub housing group, which is formed by stacking the plurality of first sub housings, a second sub housing for engaging with at least one of the engaging section and the engaged section of the first sub housing arranged at the one end of the first sub housing group is overlapped in the stacking direction, and
at the other end, in the stacking direction, of the first sub housing group, a third sub housing for engaging with at least one of the engaging section and the engaged section of the first sub housing that is arranged at the other end of the first sub housing group is overlapped in the stacking direction.

11. The stacked connector according to claim 10,
wherein the second sub housing and the third sub housing have a locking section for locking with a locked section formed on the counterpart connector.

12. The stacked connector according to claim 10 or 11,
wherein the second sub housing and the third sub housing have an overcurrent protection element for interrupting an overcurrent.
